(19) Europäisches Patentamt / European Patent Office / Office européen des brevets

(11) **EP 2 181 203 B1**

(12) **FASCICULE DE BREVET EUROPEEN**

(45) Date de publication et mention de la délivrance du brevet:
**24.05.2017 Bulletin 2017/21**

(21) Numéro de dépôt: **08786676.0**

(22) Date de dépôt: **31.07.2008**

(51) Int Cl.:
*C25B 1/08* [(2006.01)]   *C25B 1/12* [(2006.01)]
*C25B 9/00* [(2006.01)]   *C25B 9/18* [(2006.01)]

(86) Numéro de dépôt international:
**PCT/EP2008/060051**

(87) Numéro de publication internationale:
**WO 2009/016228 (05.02.2009 Gazette 2009/06)**

(54) **ELECTROLYSEUR HAUTE TEMPERATURE ET HAUTE PRESSION A FONCTIONNEMENT ALLOTHERMIQUE ET FORTE CAPACITE DE PRODUCTION**

HOCHTEMPERATUR- UND HOCHDRUCKELEKTROLYSEUR MIT ALLOTHERMEM BETRIEB UND HOHER PRODUKTIONSKAPAZITÄT

HIGH TEMPERATURE AND HIGH PRESSURE ELECTROLYSER WITH ALLOTHERMAL OPERATION AND HIGH YIELD CAPACITY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.08.2007 FR 0756900**

(43) Date de publication de la demande:
**05.05.2010 Bulletin 2010/18**

(73) Titulaire: **Commissariat à l'Énergie Atomique et aux Énergies Alternatives**
**75015 Paris (FR)**

(72) Inventeur: **AUJOLLET, Patrick**
**F-84120 Pertuis (FR)**

(74) Mandataire: **Ilgart, Jean-Christophe et al**
**BREVALEX**
**95, rue d'Amsterdam**
**75378 Paris Cedex 8 (FR)**

(56) Documents cités:
**WO-A-01/11112      WO-A-2004/113590**
**FR-A- 988 211      US-A- 5 964 089**

• **B. SUNDEN: "High Temperature Heat Exchangers (HTHE)" PROCEEDINGS OF THE FIFTH INTERNATIONAL CONFERENCE ON ENHANCED, COMPACT AND ULTRA-COMPACT HEAT EXCHANGERS: SCIENCE, ENGINEERING AND TECHNOLOGY, septembre 2005 (2005-09), pages 226-238, XP002473777**

**Description**

**DOMAINE TECHNIQUE ET ART ANTERIEUR**

L'invention se rapporte au domaine des électrolyses endothermiques à haute température de l'ordre de plusieurs centaines de degrés Celsius pour dissocier un réactif en phase liquide ou vapeur.

La présente invention se rapporte plus précisément à un électrolyseur haute température et haute pression à fonctionnement allothermique, offrant des conditions de fonctionnement stables et homogènes.

Dans la suite, pour la clarté de l'exposé, nous prendrons le cas de l'électrolyse de l'eau.

Lors de l'établissement du courant aux bornes d'un électrolyseur, une partie de l'énergie fournie par la source de courant continu va être transformée en chaleur dans les différents conducteurs et contacts électriques, mais aussi lors du transfert des ions à travers l'électrolyte. Tous ces phénomènes dissipatifs contribuent à une perte inutile d'énergie électrique, les développements technologiques actuels portent à la fois sur la limitation de ces phénomènes et sur la durée de fonctionnement stable des électrolyseurs.

Par ailleurs, l'apport en énergie nécessaire à la réaction de dissociation de la molécule d'eau peut être décomposé en une part d'énergie électrique et une part de chaleur. La quantité maximale de chaleur qui peut être absorbée par la réaction de dissociation de l'eau augmente avec la température.

Les résultats expérimentaux actuels montrent qu'au-dessous d'un seuil de température de l'ordre de 750°C les électrolyseurs ne peuvent avoir qu'un fonctionnement exothermique, i.e. la chaleur générée par les phénomènes dissipatifs liés à l'établissement du courant électrique est supérieure ou égale à la chaleur qui peut être consommée par la réaction d'électrolyse de l'eau. La chaleur excédentaire doit alors être transmise à une source froide.

Au dessus de ce seuil de température de l'ordre de 750°C que l'on appellera seuil d'endothermicité des électrolyseurs, les électrolyseurs peuvent avoir un fonctionnement autothermique c'est à dire que toute l'énergie nécessaire à la dissociation de la molécule d'eau, i.e. chaleur et travail, est apportée par le courant électrique d'alimentation des électrolyseurs.

Au dessus de ce seuil de température la théorie et les résultats expérimentaux montrent que les électrolyseurs peuvent avoir d'une manière avantageuse un fonctionnement endothermique, i.e. allothermique, c'est à dire qu'une partie de l'énergie nécessaire à la dissociation de la molécule d'eau est transmise directement sous forme de chaleur depuis une source chaude externe à l'électrolyseur.

Le fonctionnement endothermique, i.e. allothermique est préférable, puisqu'il permet de réduire la quantité d'énergie électrique nécessaire à apporter à l'électrolyseur pour permettre l'électrolyse.

Est connu un électrolyseur de l'eau, dit alcalin, dans lequel la réaction d'électrolyse s'effectue en milieu liquide alcalin. L'anode et la cathode sont séparées par une membrane ionique ou un diaphragme dans laquelle circulent des ions $OH^-$.

Les réactions aux électrodes s'écrivent :

- A la cathode : $2H_2O + 2e^- \rightarrow H_2 + 2OH^-$
- A l'anode : $2OH^- \rightarrow 1/2O_2 + 2e^-$

Cet électrolyseur fonctionne aux valeurs de température inférieures à la valeur de saturation de la solution alcaline (de 80°C à 90°C sous un bar et de 130°C à 160°C sous 30 bars).

La différence de potentiel qu'il faut maintenir entre les électrodes varie entre 1,75 V et 2,05 V suivant les valeurs de résistance électrique des électrodes et de la membrane (résistance au passage de l'ion $OH^-$). Ces valeurs sont supérieures à la valeur de différence de potentielle théorique (de l'ordre de 1,49 V à ce niveau de température) strictement nécessaire pour la réaction de dissociation de l'eau liquide.

Du fait des phénomènes thermiques dissipatifs liés aux surtensions d'activation des réactions chimiques et aux valeurs basses de la conductivité des électrodes, de la solution alcaline et de la membrane ionique, entre 15 % et 25 % de l'énergie électrique totale fournie à l'appareil va être perdue sous forme de chaleur transmise à la source froide. Le fonctionnement de cet électrolyseur est par conséquent exclusivement exothermique.

Il existe également un électrolyseur à membrane protonique dont le fonctionnement est exothermique, dans lequel l'électrolyse s'effectue en phase vapeur. L'anode et la cathode sont séparées par une membrane protonique dans laquelle circulent les ions $H^+$. Les réactions aux électrodes s'écrivent :

- A l'anode : $H_2O \rightarrow 1/2O_2 + 2H^+ + 2e^-$
- A la cathode: $2H^+ + 2e^- \rightarrow H_2$

La température de fonctionnement de ce type d'électrolyseur est limitée par la tenue mécanique de la membrane polymère, celle-ci se situe dans l'intervalle [300-400°C].

Il existe également des électrolyseurs fonctionnant à très hautes températures, appelés électrolyseurs à haute température à électrolyte issus de la technologie des piles à combustible à membrane oxyde (« Solid Oxyde Fuel Cell » en terminologie anglo-saxonne), fonctionnant selon le mode autothermique. Ces électrolyseurs se trouvent actuellement au stade expérimental ou de prototype de démonstration, ils sont alimentés par de la vapeur d'eau ou un mélange vapeur/hydrogène à très haute température mais ils ne peuvent pas fonctionner sous haute pression, i.e. plusieurs dizaines de bars, de vapeur d'eau ou de mélange alimentaire.

Les réactions d'oxydo-réduction aux électrodes s'écrivent :

• A l'anode, oxydation des ions oxygène :

$$O^{2-} \rightarrow \tfrac{1}{2} O_2 + 2e^- \qquad (I)$$

• A la cathode, réduction de la vapeur d'eau :

$$H_2O + 2e^- \rightarrow H_2 + O^{2-} \qquad (II)$$

Pour aboutir à la réaction globale :

$$H_2O \rightarrow H_2 + \tfrac{1}{2} O_2.$$

La vapeur d'eau surchauffée arrive à la cathode. Aux niveaux des sites réactionnels, elle est réduite pour former de l'hydrogène et des ions $O^{2-}$. La vapeur d'eau s'enrichit en hydrogène tandis que les ions $O^{2-}$ migrent à travers la membrane sous l'effet du champ électrique. A l'anode, les ions vont libérer leurs électrons pour former les molécules d'oxygène.

Les matériaux d'électrode couramment utilisés sont du type céramique métallique déposé sur une plaque bipolaire métallique et du type céramique conductrice d'ions pour l'électrolyte. Ces matériaux céramiques ont des valeurs de résistivité électrique et ionique qui diminuent avec la température, ce qui tend à diminuer la quantité de chaleur générée par le passage du courant électrique avec l'augmentation de la température de fonctionnement.

La conception des électrolyseurs actuellement développés où l'écoulement du mélange vapeur d'eau hydrogène sous pression s'effectue dans une cavité formée par les électrodes en matériau céramique entourées d'air à la pression atmosphérique, ne permet actuellement pas à ce type d'électrolyseur un fonctionnement à haute pression, i.e. plusieurs dizaines de bars, de mélange gazeux.

Par contre, la diminution de la quantité de chaleur générée par les phénomènes dissipatifs et l'évolution des caractéristiques thermodynamiques de la réaction de décomposition de l'eau avec la valeur de température confèrent à ce type d'électrolyseur la possibilité de fonctionnement endothermique, mais dans ce cas cela nécessite le maintien de la vapeur d'eau à une température supérieure au seuil d'endothermicité dans tout l'électrolyseur.

Il existe actuellement deux solutions pour apporter la chaleur nécessaire au fonctionnement de l'électrolyseur en mode endothermique.

La première solution consiste à apporter cette énergie par chauffage direct de la vapeur d'eau à dissocier à l'aide d'un échangeur de chaleur placé en amont de l'électrolyseur. Mais les calculs thermiques de simulation d'électrolyseur en fonctionnement endothermique montrent :

- qu'il est nécessaire, pour conserver de bonnes conditions de fonctionnement endothermique, i.e. une température supérieure au seuil d'endothermicité dans tout l'électrolyseur, d'avoir une surchauffe et un débit importants de la vapeur d'eau en entrée de l'électrolyseur, ce qui compte tenu du niveau de température requis (plus de 1100°C dans ce cas) va fortement grever les coûts de la chaudière et de toute l'installation,
- que cette solution n'est pas la plus indiquée pour fournir des conditions stables et homogènes en température de fonctionnement de l'électrolyseur à moins d'avoir des débits massiques importants de vapeur d'eau alimentaire.

Ceci va se traduire par des installations de conditionnement et de re-circulation de très grandes capacités lorsque la pression de vapeur d'eau supportée par les installations, l'électrolyseur notamment, ne peut dépasser des valeurs de quelques bars. Ceci va se traduire également par des vitesses, donc des pertes de charge, importantes pour les écoulements dans l'échangeur l'électrolyseur et les tuyauteries ce qui va jouer sur le coût en énergie des appareils de compression.

La deuxième solution consiste à apporter la chaleur nécessaire à l'aide d'un gaz caloporteur chaud mélangé à la vapeur d'eau ou mélange vapeur d'eau/hydrogène entrant dans l'électrolyseur, cette solution nécessite un appareil supplémentaire pour séparer les corps chimiques en aval de l'électrolyseur afin de récupérer le gaz caloporteur, ce qui occasionne des pertes de gaz caloporteur. Elle nécessite également un débit massique important de gaz caloporteur sous faible pression ce qui entraîne une limitation des performances, i.e. pertes de charges des gaz à travers l'électrolyseur et puissance limitée de l'électrolyseur.

Le document WO2004/113590 décrit un dispositif pour effectuer des électrolyses alcalines, or celles-ci n'ont lieu qu'en phase liquide, ce qui limite la température de fonctionnement à des valeurs inférieures à la température critique de l'eau, qui est de 374°C. Par conséquent, ce dispositif ne permet pas fonctionner dans un domaine de température permettant d'atteindre des valeurs de tension réversibles pour un fonctionnement endothermique. Pour atteindre des valeurs de tension réversible suffisamment basses à de telles températures pour fonctionner en mode endothermique, il faudrait atteindre des pressions très faibles largement inférieures à 1 bar, ce qui empêche toute application à des moyennes et grosses installations. En effet, il n'est pas envisageable de concevoir des canalisations et des étages de compression permettant d'éviter de trop fortes pertes de charges pour de si faibles niveaux de pression.

Par conséquent, les solutions actuellement connues ne permettent pas de réduire de manière efficace la consommation en énergie à apporter à l'électrolyseur puisqu'une importante surchauffe est requise

Par conséquent il n'existe actuellement pas de solutions permettant de produire à haute température et pression de manière endothermique et avec des courants électriques de faible intensité une importante quantité d'hydrogène.

C'est par conséquent un but de la présente invention d'offrir un électrolyseur apte à fonctionner à haute pression de manière endothermique avec une consommation énergétique optimisée et un fonctionnement stable et homogène en température, et offrant une grande capacité de production.

## EXPOSÉ DE L'INVENTION

Les buts précédemment énoncés sont atteints par un électrolyseur composé d'une enceinte étanche à haute pression dans laquelle sont disposées des plaques support d'électrolyse en alternance avec des plaques de chauffage. Sur chaque plaque support, sont plaquées une mosaïque de cellules d'électrolyse de petites dimensions dont au moins une partie est montée en série, ce qui permet de limiter l'intensité du courant électrique traversant les différentes cellules de l'électrolyseur et par conséquent de limiter la puissance électrique dissipée sous forme de chaleur.

Les plaques de chauffage permettent d'apporter à l'électrolyseur la quantité de chaleur nécessaire à son fonctionnement, puisque celle-ci n'est plus apportée par effet Joule du fait du fonctionnement en mode endothermique avec des termes d'irréversibilité réduits. La mise en oeuvre de plaques de chauffage intégrées à l'électrolyseur permet de maintenir la température de toutes les cellules d'électrolyse avec une variation de température inférieure à 30°C entre l'entrée et la sortie de l'électrolyseur et une surchauffe de la source chaude inférieure à 50°C par rapport à la température de fonctionnement de l'électrolyseur.

Selon un mode préféré de réalisation de la présente invention, on prévoit de réaliser un électrolyseur utilisant un grand nombre de cellules élémentaires de petites dimensions montées en série, ce qui permet de limiter l'intensité du courant électrique traversant les différents cellules de l'électrolyseur et par conséquent de limiter la puissance électrique dissipée sous forme de chaleur. En effet, le montage en série permet de ne requérir au niveau de l'alimentation électrique d'une plaque support qu'une intensité égale à celle nécessaire à une cellule d'électrolyse de très faible dimension.

Selon la présente invention, on prévoit avantageusement de réaliser un électrolyseur à haute pression de gaz électrolytique, ce qui permet de produire des quantités importantes d'hydrogène avec des installations de taille acceptable. Le fonctionnement à haute pression permet également de réduire les débits volumiques de gaz électrolytique circulant donc les pertes de charge liées à sa circulation dans l'électrolyseur et dans les autres installations, ce qui permet de réduire la consommation électrique des circulateurs. Le fonctionnement à haute pression de l'électrolyseur selon l'invention permet donc d'améliorer les performances de toute l'installation de production d'hydrogène.

Grâce à la présente invention, il est également possible de réaliser des électrolyseurs adaptés aux caractéristiques courantes d'un réseau de distribution de l'électricité en fonction du nombre de cellules d'électrolyse disposées sur chaque plaque support et des connexions entre les plaques supports, ce qui permet de simplifier la conception de l'usine de production d'hydrogène. Elle permet également de réduire la consommation électrique de l'usine de production, notamment en réduisant les pertes par effet Joule.

Selon la présente invention, on prévoit aussi de réaliser un électrolyseur comportant un confinement métallique qui permet de maintenir la vapeur sous haute ou très haute pression de plusieurs dizaines de bars. Les plaques d'électrolyse sont alors avantageusement assujetties à des contraintes mécaniques de compression puisque les gaz formés qu'elles contiennent sont à une pression plus faible que le gaz dans lequel elles baignent.

La conception des cellules et leur disposition dans une enceinte sous pression permettent que les ensembles cathode - électrolyte - anode ne supportent pas les efforts liés aux différences de pression entre les gaz qui s'écoulent. Les efforts dus aux différences de pression entre la vapeur d'eau et les gaz produits ou entre la vapeur d'eau et le fluide caloporteur ou entre la vapeur d'eau et l'extérieur sont supportés par les éléments internes de la cuve, comme les montants des cadres métalliques creux dans lesquels circule l'oxygène à basse pression, et la calandre des échangeurs de chaleur pour le caloporteur liquide, et par l'enceinte de l'électrolyseur.

Par conséquent, les ensembles cathode - électrolyte - anode peuvent être optimisés pour offrir une résistance électrique réduite en réduisant leur épaisseur, une résistance ionique et une résistance à la diffusion des gaz dans les électrodes réduites en augmentant leur porosité, tout en permettant un fonctionnement à un niveau de pression élevé dans l'enceinte de l'électrolyseur.

Le fluide caloporteur peut être en phase liquide, i.e. métal ou sel fondus ou gazeuse. Selon un mode préféré de réalisation le fluide caloporteur est un gaz porté à une pression légèrement inférieure à celle du gaz d'électrolyse ce qui permet de réduire les contraintes mécaniques de fabrication des plaques de chauffage.

Selon un autre aspect de l'invention les gaz libérés par la réaction d'électrolyse sont collectés au niveau de chaque cellule élémentaire par le cadre support.

Selon un autre aspect de l'invention l'ensemble des plaques support et des cellules d'électrolyse sont contenues dans une enceinte haute pression.

La présente invention a alors principalement pour objet un électrolyseur pour électrolyse haute température selon la revendication 1. Le bain électrolytique est avantageusement sous forme gazeuse.

Le fluide caloporteur peut être un gaz sous haute pression, par exemple de l'hélium. Il peut également être un métal fondu, par exemple du zinc ou des sels fondus, ce qui permet de réduire les pertes de charge.

Dans un exemple de réalisation, la plaque d'électrolyse comporte une plaque support munie d'ouvertures réparties en lignes et en colonnes sur ses deux faces, la plaque support étant creuse pour la collecte du gaz produit à l'anode, ladite plaque comportant un collecteur dudit gaz, au moins une partie des cellules d'électrolyse étant connectées électriquement deux à deux par un connecteur comportant un cadre rapporté sur une cathode d'une cellule et une plaque perforée rapportée sur une anode d'une cellule adjacente de sorte à offrir une résistance électrique de connexion réduite entre les plaques, et dans lequel chaque ouverture est obturée par une cellule d'électrolyse, chaque anode étant orientée vers l'intérieur de la plaque support.

Avantageusement, l'anode et la cathode sont maintenues comprimées avec un électrolyte par le cadre d'un connecteur et la plaque perforée d'un autre connecteur.

L'électrolyseur peut comporter des assemblages de cellules formant des barrettes allongées, chaque barrette comportant un nombre identique d'anodes égal au nombre d'ouvertures par ligne ou par colonne, les barrettes étant connectés en série.

L'électrolyseur peut comporter un joint entre chaque plaque perforée et le contour de l'ouverture associée, ledit joint étant comprimé par les moyens de fixation des cellules sur la plaque support et la pression du bain électrolytique à haute ou très haute pression.

Les cellules des deux faces sont par exemple connectées en série par un connecteur traversant la plaque support ou chevauchant un des bords latéraux.

De manière avantageuse, l'électrolyseur comporte une enceinte apte à maintenir un gaz électrolytique sous haute ou très haute pression de plusieurs dizaines de bars (de 30 à 120 bars voire au delà), ce qui permet d'obtenir directement une production sous haute pression de gaz produit de l'électrolyse avantageusement conditionné pour le stockage et le transport des gaz produits sans nécessité ou tout au moins en réduisant les étages de compression des gaz produits en aval de l'électrolyseur.

Ceci permet également de réduire les vitesses d'écoulement du gaz d'électrolyse entre les différentes plaques, donc de réduire les pertes de charge dans l'électrolyseur. Ceci permet aussi d'obtenir pour des valeurs importantes de la capacité de production de l'installation des dimensions acceptables de l'unité de production tout en limitant des valeurs de pertes de charge des écoulements de gaz, ce qui permet de réduire la consommation électrique des moyens de relevage de la pression dans les circuits.

De manière avantageuse ce type d'électrolyseur peut permettre le fonctionnement à haute, voire très haute pression, des différents étages d'une usine de production, qui peut ne comporter comme seul équipement de compression les pompes d'alimentation en liquide à électrolyser de l'étage d'alimentation de l'usine. Cela permet de rendre plus compactes les différentes installations de l'usine et de réduire la consommation en électricité de l'usine en réduisant, voire en rendant nul le nombre de compresseurs nécessaires et en réduisant la capacité des moyens de relevage de la pression dans les circuits du fait de la réduction des pertes de charge.

La plaque d'électrolyse comporte avantageusement un cadre support comportant des montants délimitant des fenêtres rectangulaires disposées en lignes et en colonnes dans lequel sont montées les cellules d'électrolyse de forme correspondante.

Chaque cellule d'électrolyse peut comporter un corps central formé par une âme électriquement conductrice sous forme de plaque, recouverte par l'anode, elle-même recouverte par un électrolyte, lui-même recouvert par la cathode, et un boîtier électriquement conducteur entourant le corps central et en contact électrique avec la cathode et exerçant un effort de compression sur les couches formant le corps central, une broche d'anode et des moyens de connexion électrique de la cathode portés par le boîtier. La cellule est fixée sur le cadre support par des pattes de fixation du boîtier isolées électriquement du cadre support.

Le boîtier comporte avantageusement deux demi-cadres venant de part et d'autre du corps central de manière à appliquer les couches les unes contre les autres, des moyens pour isoler électriquement l'anode du boîtier étant prévus entre l'âme, l'anode et le boîtier. Ces demi-cadres rigidifient la cellule d'électrolyse.

L'électrolyseur comporte avantageusement des moyens de collecte du ou des gaz produit à l'anode vers l'extérieur de l'électrolyseur. Ces moyens de collecte comportent au moins un canal pratiqué dans l'anode et relié à un embout de collecte, et le cadre support, ledit cadre support étant creux et formant un collecteur dudit ou desdits gaz, l'embout de collecte étant relié de manière étanche audit cadre support, ledit cadre amenant le ou les gaz produits en dehors de l'électrolyseur, la pression du ou des gaz produits à l'anode étant inférieure à celle du bain électrolytique, l'anode, l'électrolyte et la cathode étant ainsi pressés les uns contre les autres.

L'âme de la cellule d'électrolyse peut alors comporter des rainures et des réservoirs, l'un des réservoirs étant relié à l'embout de collecte du ou des gaz, ledit embout étant brasé sur un raccord fixé sur le cadre support, des moyens pour isoler électriquement l'anode du cadre support étant prévus entre le raccord et le cadre support.

Les moyens de chauffage sont formés par au moins une plaque de chauffage disposée parallèlement à la plaque d'électrolyse, dans lequel circule le fluide caloporteur.

Le fluide caloporteur peut être chauffé par exemple par une chaudière classique à combustible fossile ou à biomasse ou une chaudière nucléaire à très haute température ou l'énergie solaire ainsi le recours à l'énergie électrique est réduit.

La plaque de chauffage a sensiblement la même taille que la plaque d'électrolyse et comporte une enveloppe métallique dans laquelle est disposé un corps d'échanges thermiques comportant une pluralité de canaux s'étendant entre une extrémité alimentée en fluide caloporteur chaud et une extrémité reliée à un collecteur de fluide caloporteur froid.

L'enceinte peut comporter des glissières latérales recevant des bords latéraux des plaques de chauffage et des plaques d'électrolyse, des moyens pour isoler électriquement le cadre support de l'enceinte étant prévus dans les glissières. Le montage est alors facilité.

Selon l'invention, l'électrolyseur comporte une pluralité de plaques d'électrolyses parallèles entre elles et une pluralité de plaques de chauffage disposées de part et d'autre des plaques d'électrolyse.

Dans un premier mode de réalisation, les cellules d'électrolyse sont réparties en colonnes et en lignes, les cellules d'une même colonne étant reliées électriquement en série, les colonnes étant reliées en série et les plaques d'électrolyse étant reliées en série entre elles.

Dans un deuxième mode de réalisation, les cellules d'électrolyse sont réparties en colonnes et en lignes, les cellules d'une même colonne étant reliées électriquement en série, les colonnes étant reliées en série et les plaques d'électrolyse étant reliées en parallèle.

Dans un troisième mode de réalisation, les cellules d'électrolyse sont réparties en colonnes et en lignes, chaque colonne comporte un nombre de cellules inférieur au nombre de cellules en série correspondant à la tension de claquage, lesdites colonnes étant toutes connectées en parallèle d'une plaque à l'autre.

L'enceinte peut comporter une orifice d'alimentation en fluide actif prévu sur une paroi latérale orthogonale aux plaques d'électrolyse, ce qui permet de simplifier la conception de l'enceinte.

L'enceinte comporte au moins un orifice de collecte du ou des gaz générés aux cathodes sur une paroi supérieure de l'enceinte, ce qui améliore la sécurité de l'électrolyseur.

Les connexions électriques entre les différentes plaques et avec une source d'alimentation électrique sont avantageusement prévues à l'extérieur de l'enceinte. De manière encore préférée, lesdites connexions électriques sont refroidies. La conductivité est donc améliorée.

La présente invention a également pour objet une installation de production de gaz par électrolyse comportant :

- au moins un électrolyseur selon la présente invention,
- une alimentation électrique à tension donnée,

dans laquelle les cellules d'une même plaque sont connectées en série et les plaques d'électrolyse sont connectées en parallèle, le nombre de cellules d'électrolyse par plaque d'électrolyse étant choisi en fonction de la tension donnée de l'alimentation électrique.

Ce qui permet d'adapter facilement l'électrolyseur à tout type d'alimentation.

La présente invention a également pour objet une installation de production de gaz par électrolyse comportant :

- au moins un électrolyseur selon la présente invention,
- une alimentation électrique à tension donnée,

dans laquelle les cellules d'électrolyse sont réparties en colonnes et en lignes, les cellules de chaque colonne étant reliées en série, les colonnes étant reliées en parallèle, le nombre de cellules de chaque colonne étant choisi en fonction de la tension donnée de l'alimentation électrique.

Cette installation permet une très grosse capacité de production de gaz.

La présente invention a également pour objet un procédé de fabrication d'au moins un gaz par électrolyse mettant en oeuvre un électrolyseur selon la présente invention, dans lequel la pression du bain électrolytique est sensiblement égale ou supérieure à la pression de stockage et/ou de distribution dudit gaz, par exemple entre 30 bars et 130 bars.

Le rapport entre le débit molaire de vapeur d'eau et le débit molaire de dihydrogène produit a avantageusement une valeur de 2 à 5, ce qui permet d'obtenir une pression de vapeur en dihydrogène en sortie de l'électrolyseur élevée tout en assurant une couche suffisante d'eau sur les plaque d'électrolyse.

## BRÈVE DESCRIPTION DES DESSINS

La présente invention sera mieux comprise à l'aide de la description qui va suivre et des dessins en annexe, sur lesquels :

- la figure 1A est une représentation schématique d'une chambre de collecte de l'hydrogène généré et d'alimentation en caloporteur chaud pour un électrolyseur selon un premier mode de réalisation d'un electrolyseur selon l'invention,
- la figure 1B est une représentation schématique d'une chambre d'alimentation en fluide actif et de collecte du caloporteur froid pour un électrolyseur selon le premier mode de réalisation d'un électrolyseur selon l'invention,
- les figures 2A et 2B représentent des vues en perspective d'un corps central d'une cellule d'électrolyse dans des états intermédiaires de réalisation selon la présente invention,
- la figure 3 est une vue en perspective du corps central complet de la cellule d'électrolyse,
- la figure 4 est une vue en coupe longitudinale du corps central de la cellule d'électrolyse des figures 2A et 2B,
- la figure 5 est une vue en perspective d'un cadre destiné à entourer le corps central représentée sur la figure 3,
- la figure 6 est une vue en perspective de la cellule d'électrolyse,
- les figures 7A et 7B sont des vues en coupe transversale d'un électrolyseur selon l'invention au niveau d'une plaque d'électrolyse,
- les figures 8A à 8C représentent respectivement des vues de face, en coupe transversale et en coupe longitudinale d'une plaque de chauffage pour un électrolyseur selon la présente invention, l'intérieur de la plaque de chauffage étant montré sur la figure 8A,
- la figure 9 est une vue en coupe transversale d'un électrolyseur selon l'invention au niveau d'une plaque de chauffage,
- la figure 10 est un vue de face d'une face intérieure d'une paroi latérale de l'électrolyseur portant des glissières destinées à recevoir les bords latéraux des plaques d'électrolyse et des plaques de chauffage,
- les figures 11A à 11C sont respectivement des vues de dessous, en coupe longitudinale et de dessus d'une plaque de connexion pour la connexion sur la chambre supérieure,
- la figure 11D est un exemple de connexion des broches d'anode et/ou de cathode sans plaques de connexion,
- la figure 12 est une vue de dessous d'une plaque de connexion montée sur la chambre inférieure,
- la figure 13 est une vue de détail d'une plaque d'électrolyse,
- la figure 14 est une vue en coupe longitudinale d'un montant du cadre support de la plaque de la figure 13,
- la figure 15A est une vue de face d'un plaque d'électrolyse seule selon le deuxième mode de réalisation pour une connexion en parallèle de celles-ci,
- la figure 15B est une vue en coupe de l'électrolyseur selon le deuxième mode de réalisation au niveau de la plaque de la figure 15A,

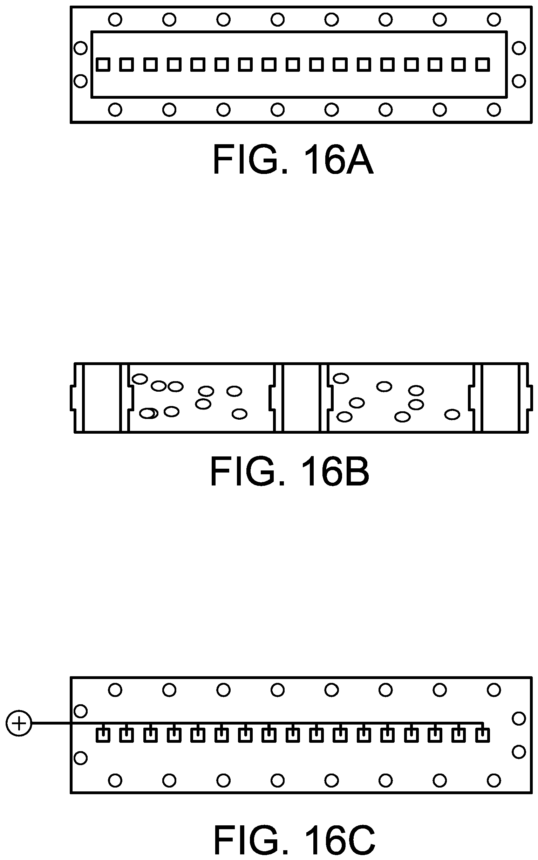

- les figures 16A à 16C sont respectivement des vues de dessous, en coupe longitudinale et de dessus d'une plaque de connexion pour la connexion sur la chambre supérieure pour l'électrolyseur selon le deuxième mode de réalisation,
- la figure 17A est une vue en coupe de l'électrolyseur selon un troisième mode de réalisation au niveau d'une plaque d'électrolyse,
- la figure 17B est une vue de face de la plaque d'électrolyse de l'électrolyseur du troisième mode de réalisation,
- la figure 18 est une vue en coupe de l'électrolyseur selon le troisième mode de réalisation au niveau d'une plaque de chauffage,
- la figure 19 est une vue de l'intérieur d'une paroi latérale de l'enceinte au niveau d'une plaque de répartition du débit de gaz électrolytique munie des glissières de montage des plaques d'électrolyse et de chauffage,
- la figure 20 représente une distribution des valeurs de température d'un mélange eau/hydrogène en °C et du fluide caloporteur le long d'une plaque électrolyse (en mètre) d'un électrolyseur selon la présente invention,
- la figure 21 représente les fonctions thermodynamiques de la réaction de dissociation de l'eau,
- la figure 22 représente la répartition chaleur/électricité en fonction de la température pour les électrolyseurs actuels sous la forme d'un graphique en bâton,
- la figure 23 représente un exemple de caractéristique d'électrolyseur, sur laquelle on peut voir l'évolution du potentiel en fonction de la densité de courant,

- la figure 24 est une vue en perspective d'une plaque d'électrolyse selon un quatrième mode de réalisation,
- la figure 25 est une vue en perspective de la plaque support de la plaque d'électrolyse de la figure 25 ;
- les figures 26A à 26C sont des vues en perspective des cellules d'électrolyse seules et de détails de celles-ci de la plaque d'électrolyse de la figure 25,
- la figure 26D est une vue en coupe transversale d'une variante de réalisation d'une cellule représentée sur la figure 26A,
- la figure 27 est une vue en perspective de dessus d'une variante de réalisation des colonnes de cellules selon le quatrième mode de réalisation,
- la figure 28 est une vue de face d'une variante de réalisation d'une plaque d'électrolyse selon la quatrième mode de réalisation.

## EXPOSÉ DÉTAILLÉ DE MODES DE RÉALISATION PARTICULIERS

A titre d'illustration, nous allons exposer les différents régimes de fonctionnement en eau d'une cellule élémentaire d'électrolyse haute température composée d'une anode alimentée par un courant électrique I, d'une cathode et d'un électrolyte. Ces différents éléments étant formés de matériau céramique.

La réaction de décomposition de l'eau est une transformation endothermique, l'équation de Gibbs-Helmholtz montre que la variation d'enthalpie libre d'un mélange réactifs-produits lors d'une réaction endothermique diminue avec la température de réaction, ce qui veut dire de manière plus schématique, que plus la température du mélange vapeur d'eau, hydrogène, et oxygène formé sera élevée, plus la part d'énergie électrique nécessaire à la dissociation des molécules d'eau sera réduite, et plus la part d'énergie thermique nécessaire au maintien à température constante du mélange sera élevée.

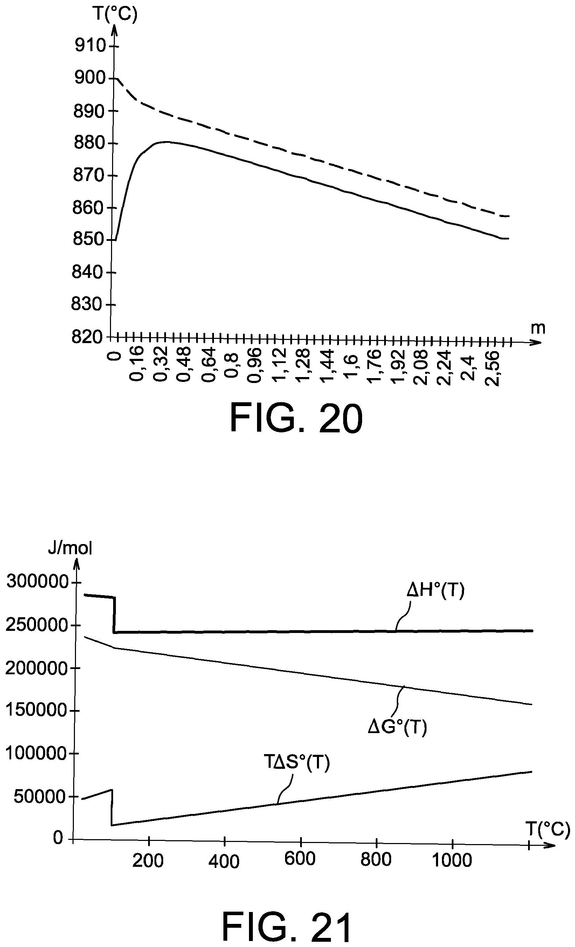

Les valeurs en fonction de la température de $\Delta G°$, $\Delta H°$ et $T*\Delta S°$, ($\Delta H°$ étant la demande énergétique totale $\Delta H° = T*\Delta S° + \Delta G°$) de dissociation d'une mole de d'eau sous une pression de 1 bar (conditions standards) sont représentées par les courbes $\Delta G°$, $\Delta H°$, $T*\Delta S°$ respectivement sur le graphique de la figure 21 avec à la température de saturation, la diminution de $T*\Delta S°$ égale à la chaleur de vaporisation d'une mole d'eau.

Dans le domaine concerné par l'invention c'est à dire en phase vapeur, les valeurs de $\Delta H°$ et de $\Delta S°$ sont pratiquement constantes et l'énergie thermique qui peut être apportée lors de la dissociation d'une mole d'eau vapeur représentée par le produit de l'entropie par la température $T*\Delta S°$ est proportionnelle à la température. Le terme $\Delta G°(T)$ représentant la demande en énergie électrique pour la transformation des corps purs à la température T diminue alors de manière linéaire avec la température.

Dans ces conditions, on considère la réaction globale d'électrolyse d'une mole d'eau en phase vapeur à la température T à la pression totale P :

$$H_2O(g) \rightarrow H_2(g) + \tfrac{1}{2}O_2(g) \qquad (1).$$

Cette réaction s'accompagne d'une variation d'enthalpie libre $\Delta G$.

Si on fait, à des fins de simplification de l'exposé, l'hypothèse de la loi de Raoult sur les mélanges de gaz parfaits, la variation d'enthalpie libre $\Delta$**G** représentant la demande en énergie électrique pour la dissociation d'une mole d'eau sous forme vapeur s'écrit :

$$\Delta G(T,P) = \Delta G°(T,P_0) + RT * \mathrm{Ln}(P_{H2} * P_{O2}^{\tfrac{1}{2}}/P_{H2O}),$$

où $\Delta G°(T)$ est la variation d'enthalpie libre standard de Gibbs à la température T sous $P_0 = 1$ bar.

$P_{H2}$, $P_{O2}$ sont les pressions partielles des gaz, en bar ;

$P_{H2O}$ est la pression partielle de la vapeur d'eau, en bar ;

T est la température, en K ;

R est la constante des gaz parfaits (8,314 J.mol$^{-1}$K$^{-1}$).

$\Delta G$ représente l'énergie à apporter pour dissocier une mole de vapeur d'eau à la température T sous la pression totale P.

$2F*E$ est l'énergie électrique fournie lors du passage du potentiel de référence zéro au potentiel E d'une charge de 2F (F étant le nombre de faraday : valeur absolue de la charge d'une mole d'électrons, soit 96485 C).

La valeur absolue du potentiel d'équilibre (à courant nul) s'écrit donc :

$$E_{i=0} = \Delta G/2F.$$

Il vient donc selon la loi de Nernst :

$$E_{i=0} = E° + (RT/2F) * Ln (P_{H2} * P_{O2}^{\frac{1}{2}}/P_{H2O}).$$

E° étant égal à $\Delta G°/2F$.

En circuit fermé, la tension à appliquer aux bornes de la cellule d'électrolyse est supérieure à la tension réversible $E_{i=0}$ donnée par la loi de Nernst. En effet, avec l'établissement d'un courant d'intensité I dans les différents éléments qui composent la cellule, de nombreux phénomènes d'irréversibilité se produisent.

Les phénomènes principaux sont :

- les résistances ($R_{ohmique}$) vis-à-vis du passage du courant dans les matériaux constituant la plaque d'électrolyse et les interconnexions qui provoquent des chutes ohmiques ; un des facteurs de perte est lié à l'électrolyte solide,
- les surtensions ($\eta$) d'électrodes, liées à l'activation des réactions élémentaires aux interfaces électrodes-gaz ainsi qu'à la diffusion des gaz dans les électrodes.

La tension à appliquer aux bornes de la cellule d'électrolyse s'écrit alors :

$$E = E_{i=0} + R_{ohmique}*I + \sum \eta.$$

Ou encore :

$$E = E°+(RT/2F)*Ln(P_{H2}*P_{O2}^{\frac{1}{2}}/P_{H2O})+R_{ohmique}*I+\sum \eta.$$

Les valeurs de résistances ohmiques et de surtensions dépendent des caractéristiques physiques des électrolyseurs, elles diminuent avec la température de fonctionnement.

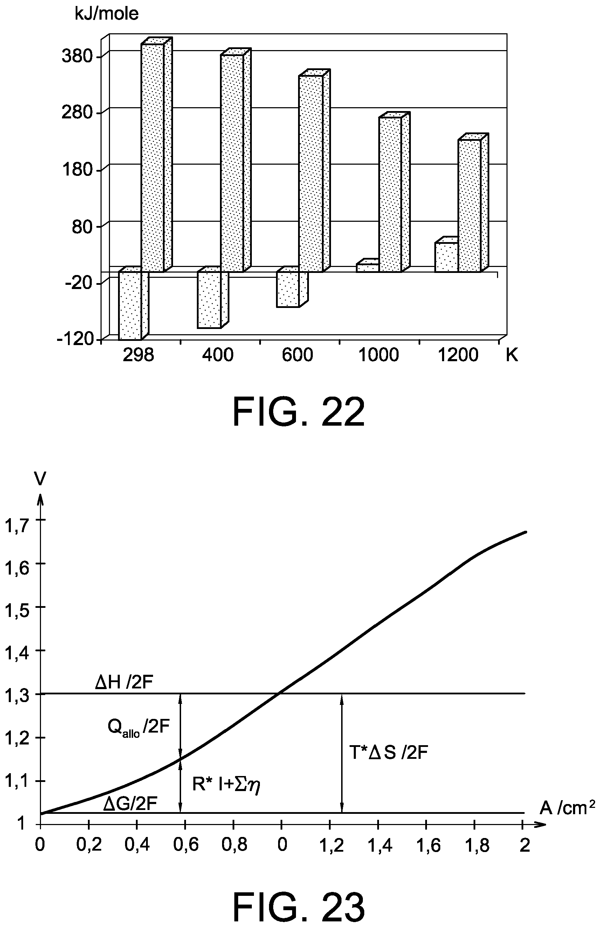

Comme nous l'avons déjà indiqué précédemment, pour les appareils actuels, en dessous d'un seuil de température de l'ordre de 750°C (comme cela est visible sur la figure 22) la quantité de chaleur générée par effet Joule du fait de l'alimentation électrique des cellules d'électrolyse est supérieure à la chaleur consommée par la réaction d'électrolyse, le fonctionnement de l'ensemble est alors exothermique.

Les développements technologiques en cours, notamment dans le choix des matériaux et dans la réduction des épaisseurs d'électrode et d'électrolyte en balance avec les contraintes de tenue mécanique, tendent à abaisser le seuil de température à partir duquel l'électrolyseur fonctionne de manière endothermique.

Lors de l'électrolyse, une quantité d'énergie correspondant à la part entropique $T*\Delta S$ doit être apportée au procédé sous forme de chaleur. Une partie de cette chaleur est produite par effet Joule au sein de l'électrolyseur, dépendant de l'intensité du courant I traversant la cellule d'électrolyse :

Dans le cas où :

$$Rohmique*I2 + \sum \eta*I > T* \Delta S*I/2F,$$

l'électrolyseur produit trop de chaleur, il est en fonctionnement exothermique, le maintien à température constante des réactifs et des produits nécessite alors l'évacuation de la chaleur vers une source froide.

Dans le cas où :

$$R_{ohmique}*I^2 + \sum \eta*I = T* \Delta S*I/2F$$

l'électrolyseur produit suffisamment de chaleur, il est à l'équilibre thermique le maintien à température des réactifs et des produits ne nécessite pas de source de chaleur externe, l'électrolyseur fonctionne donc en mode autothermique, c'est-à-dire sans source de chaleur externe.

Dans le cas où :

$$R_{ohmique}*I^2 + \sum \eta *I < T* \Delta S*I/2F,$$

la chaleur produite par l'électrolyseur ne suffit pas à maintenir en équilibre thermique la réaction de dissociation de l'eau, l'électrolyseur est en fonctionnement endothermique, un apport en chaleur provenant d'une source chaude externe est alors nécessaire pour le maintenir à température constante. Le mode de fonctionnement est alors allothermique.

A titre d'exemple, la figure 23 représente l'évolution calculée du potentiel E (E = $E_{i=0}$+ Rohmique*I+$\sum \eta$) en V en fonction de la densité de courant Dc sur une plaque d'électrolyse (rapport I/S en A/cm2 où I est l'intensité du courant d'alimentation de la plaque en A et S la surface d'anode/électrolyte/cathode en cm2) pour une pression totale de 30 bars, une température de 900°C, une moyenne du rapport H2/H2O fixée à 0,5 et une épaisseur d'électrolyte de 30 $\mu$m.

Au-dessus du potentiel V1 de valeur $\Delta$H/2F, le fonctionnement est exothermique.

Le potentiel V2 d'une valeur $\Delta$G/2F est le potentiel minimum requis pour l'électrolyse.

Entre les potentiels V1 et V2, le fonctionnement est endothermique.

Dans l'exemple de plaque d'électrolyse dont la caractéristique est représentée sur la figure 23, la valeur de densité de courant 0,99 A.cm$^{-2}$, correspondant au point particulier de l'équilibre thermique. Au-dessus, l'hydrogène sera produit selon le mode exothermique.

Le fonctionnement endothermique de la plaque d'électrolyse se situe dans ce cas sur la plage de densité de courant allant de 0 A.cm$^{-2}$ à 0,98 A.cm$^{-2}$, les surtensions et les pertes ohmiques $\Delta$élec ne produisent pas assez de chaleur, il faut donc amener pour chaque mole d'eau dissociée une quantité de chaleur $Q_{allo}$ d'une source externe.

L'électrolyseur selon la présente invention permet d'effectuer des électrolyses en fonctionnement endothermique dans des conditions stables et homogènes de température.

L'électrolyseur selon la présente invention comporte une enceinte étanche dans lequel sont montées parallèlement et de manière intercalée des plaques d'électrolyse 100 et des plaques de chauffage 10; l'enceinte comporte des passages pour alimenter l'électrolyseur et collecter les fluide de l'électrolyseur, ainsi que des passages pour la circulation du fluide caloporteur dans les plaques de chauffage et le raccordement électriques des plaques d'électrolyse.

L'enceinte est réalisée de telle sorte qu'elle puisse tenir des hautes pressions de l'ordre de plusieurs dizaines de bars. Avantageusement, ces pressions correspondent aux pressions de stockage et de transport du gaz à produire, afin de limiter les étapes de compression ultérieure. Ces pressions sont par exemple comprises entre 20 bars et 130 bars, voire au-delà.

L'enceinte peut être réalisée par exemple en acier 800H ou en Hastelloy avec une épaisseur déterminée, par exemple de l'ordre de plusieurs centimètres. L'épaisseur des parois de l'enceinte peut être déterminée en fonction du niveau de pression selon les Règles de Conception et de Construction des Matériels.

Compte tenu de la forme simple du caisson d'électrolyse, on peut prévoir un chemisage en carbure de silicium (SiC) des parois internes d'un ou plusieurs centimètres pour protéger l'enveloppe mécanique contre les phénomènes de corrosion et pour abaisser légèrement la température de la paroi mécanique. On peut également utiliser des techniques de revêtements en verre réfractaire pour protéger les parois internes de l'enveloppe mécanique. Le chemisage carbure de silicium contribue également à limiter les pertes thermiques de l'appareil.

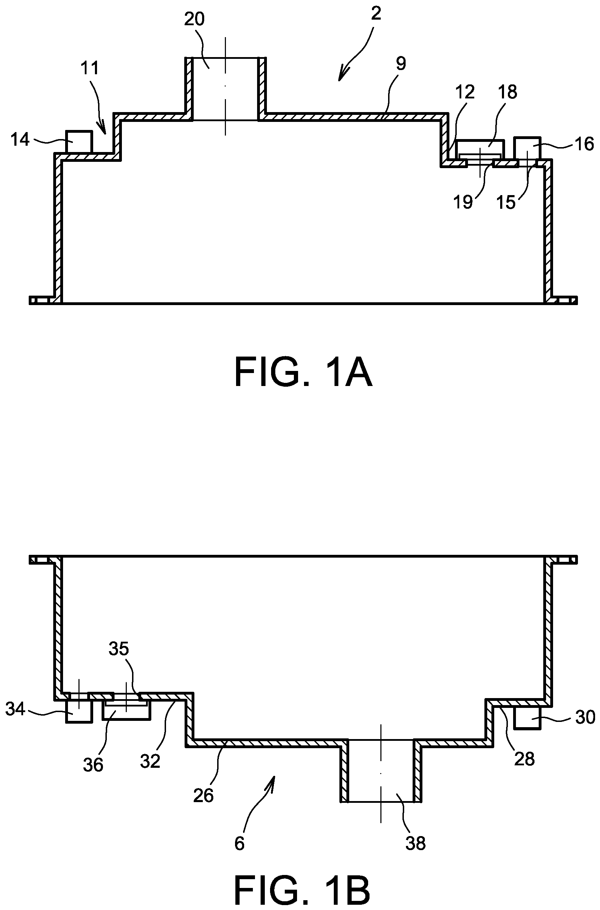

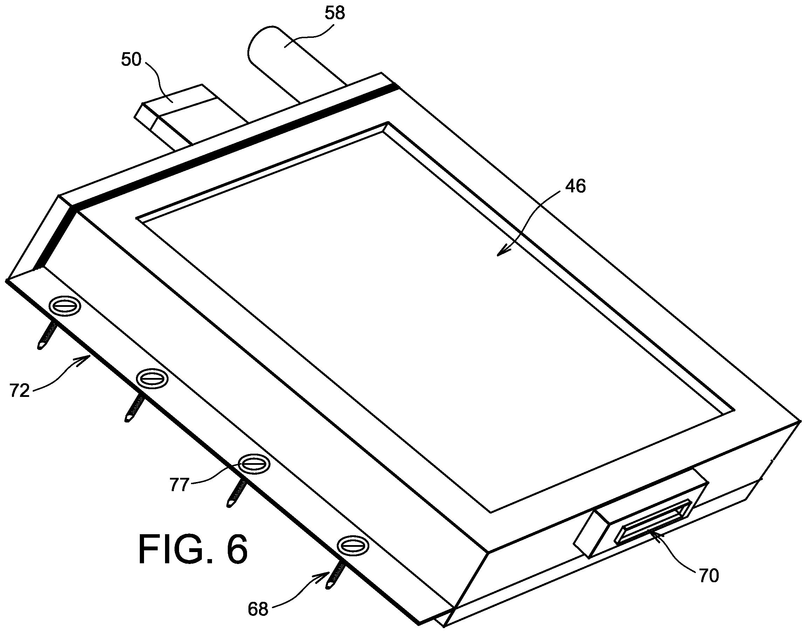

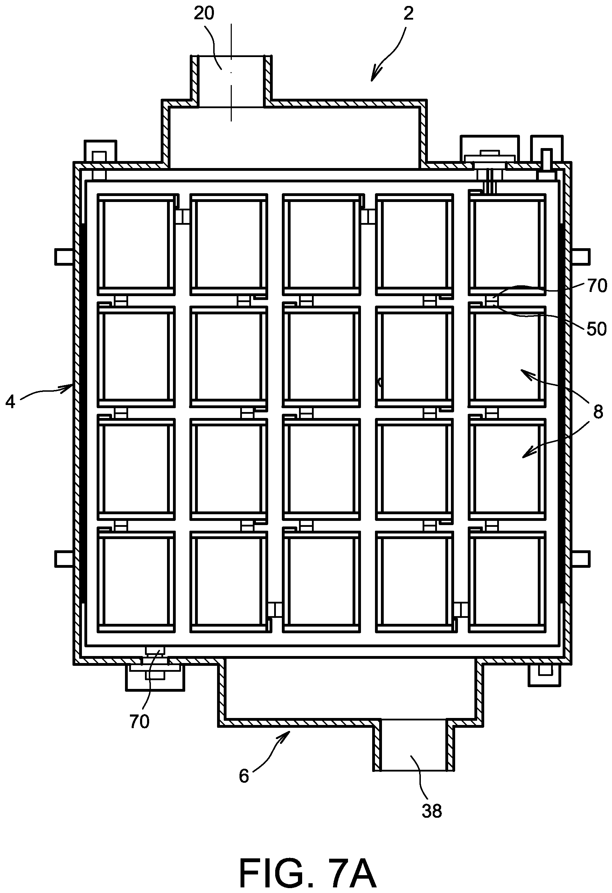

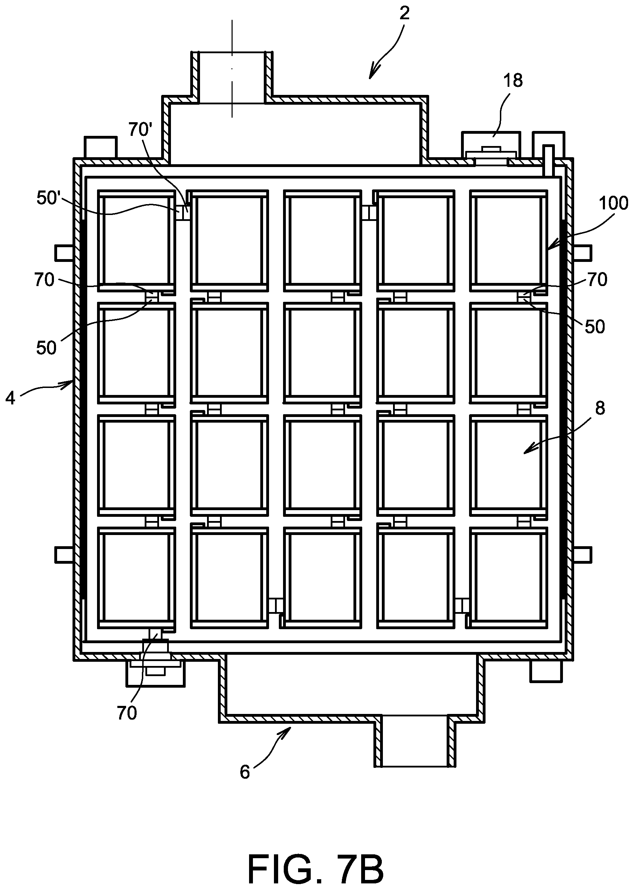

Sur les figures 7A et 7B, on peut voir un premier mode de réalisation d'un électrolyseur selon l'invention vu en coupe au niveau d'une plaque d'électrolyse dont les éléments individuels sont représentés sur en détail sur les figures 1 à 6.

La plaque d'électrolyse selon la présente invention comporte une pluralité de cellules d'électrolyse 8 formant un matrice ou mosaïque montées sur un cadre support 102.

Dans la suite de la description, nous désignerons l'électrolyseur-échangeur par électrolyseur à des fins de simplicité.

Comme on peut le voir sur les figures 7A et 7B, l'électrolyseur comporte une chambre supérieure 2 formant chambre de collecte du dihydrogène $H_2$ produit, d'un caisson médian 4 et d'un chambre inférieure 6 formant chambre d'alimentation en vapeur d'eau. Ces trois éléments peuvent être soudés entre eux ou assemblés par des brides 7 pour former une enceinte métallique étanche de forme proche d'un parallélépipède rectangle remplie majoritairement de vapeur d'eau sous une pression de plusieurs dizaines de bars.

Selon la présente invention, l'électrolyseur comporte également des plaques d'électrolyse 8 disposées en alternance avec des plaques de chauffage 10 dans l'enceinte étanche.

L'alimentation électrique des plaques d'électrolyse s'effectue au niveau des chambres supérieure 2 et inférieure 6.

Nous allons dans la suite de la description décrire de manière détaillée chacun des composants de l'électrolyseur.

La chambre supérieure 2 a la forme d'un boîtier retourné dont la face supérieure 9 comporte un premier renfoncement 11 pourvu d'une pluralité d'ouvertures 13 alignées pour le passage d'embouts des plaques de chauffage, recouvertes par un conduit de distribution du caloporteur chaud 14 soudé sur la face supérieure 9.

La surface supérieure 9 comporte un deuxième renfoncement 12 pourvu d'une pluralité d'ouvertures 15 pour le passage des embouts de collecte d'oxygène des plaques d'électrolyse 100 recouvertes par un conduit supérieur de collecte de l'oxygène 16, celui-ci étant soudé ou vissé (ou monté) hermétiquement sur la face supérieure 9.

De manière avantageuse, un canal de refroidissement 18 des connexions électriques supérieures est également soudé ou vissé hermétiquement dans le deuxième renfoncement 12, recouvrant une pluralité d'ouvertures 19 pour le passage des broches d'anode ou de cathode des plaques d'alimentation.

La demi-coque de la chambre supérieure 2 comporte également un conduit principal 20 de sortie du mélange eau vapeur/hydrogène formé dans l'électrolyseur.

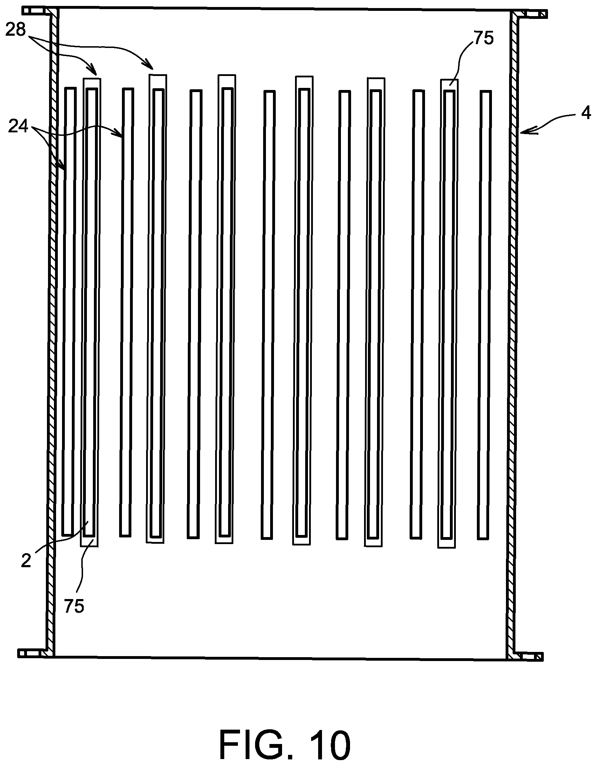

Le caisson médian 4 comporte une enveloppe métallique de forme parallélépipédique ouverte avec sur deux faces opposées des glissières latérales 22, 24, comme représentée sur la figure 10, dans lesquelles seront insérées les plaques d'électrolyse 100 en alternance avec les plaques de chauffage 8 respectivement.

La chambre inférieure 6 est de forme très proche de celle de la chambre supérieure 2. Elle a la forme d'un boîtier ouvert dont la face inférieure 26 comporte également un renfoncement 28 muni d'une série d'ouvertures 29 pour le passage des embouts de collecte du fluide froid, ces ouvertures 29 étant recouvertes par un conduit de collecte 30 du caloporteur froid soudé sur le renfoncement 28, et un autre renfoncement 32 comportant des ouvertures 33 pour le passage des embouts de collecte de l'oxygène, recouvertes par un conduit 34 inférieur de collecte de l'oxygène, soudés sur le renfoncement 32.

Avantageusement un canal de refroidissement 36 des connexions électriques est également prévu au dessus d'ouvertures 35 pour le passage des broches d'anode et ou de cathode et est soudé sur le renfoncement 32. La chambre inférieure 2 comporte également un conduit principal 38 d'alimentation en eau vapeur sous pression.

L'alimentation électrique des plaques d'électrolyse à la source de puissance électrique s'effectue par des tresses métalliques situées dans les canaux de refroidissement 18, 36 ce qui permet d'obtenir une très bonne conductivité électrique des conducteurs métalliques. En outre, les connexions électriques ont avantageusement lieu à l'extérieur de l'électrolyseur et donc ne sont pas soumises à la haute température dans l'électrolyseur.

Nous allons maintenant décrire une cellule d'électrolyse 8 selon l'invention, celle-ci comporte un corps central 8.1 et un boîtier externe 8.2.

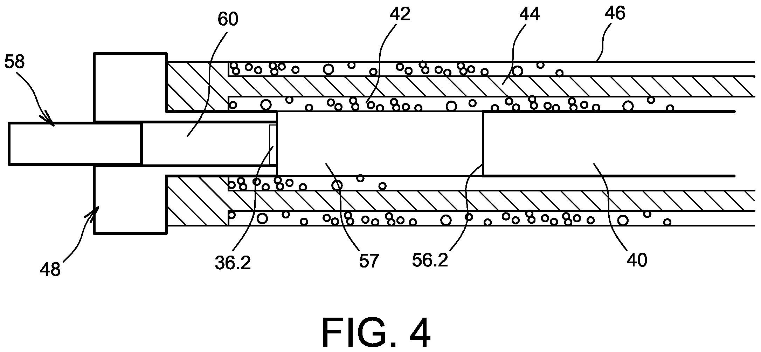

De manière générale, le corps central 8.1 selon l'invention est stratifié, i.e. il est formé par une superposition de couches. Ces couches sont particulièrement visibles sur la vue en coupe longitudinale d'une cellule d'électrolyse de la figure 4.

Le corps central 8.1 selon l'invention comporte une âme rigide 40, recouverte par une anode 42 sur ses deux faces principales, d'un électrolyte 44 recouvrant l'anode et d'une cathode 46 recouvrant l'électrolyte 44.

L'âme 40 est avantageusement métallique pour conduire le courant ou céramique haute densité dans le même matériau que l'anode pour avoir des caractéristiques de dilatation proche de celles de l'anode. Elle a sensiblement une forme rectangulaire de quelques millimètres d'épaisseur et comporte à une extrémité longitudinale une tête 48 plus épaisse, par exemple de l'ordre d'un centimètre d'épaisseur, de laquelle est solidaire une broche d'anode 50, la broche d'anode 50 étant destinée à relier l'anode 42 à l'alimentation électrique.

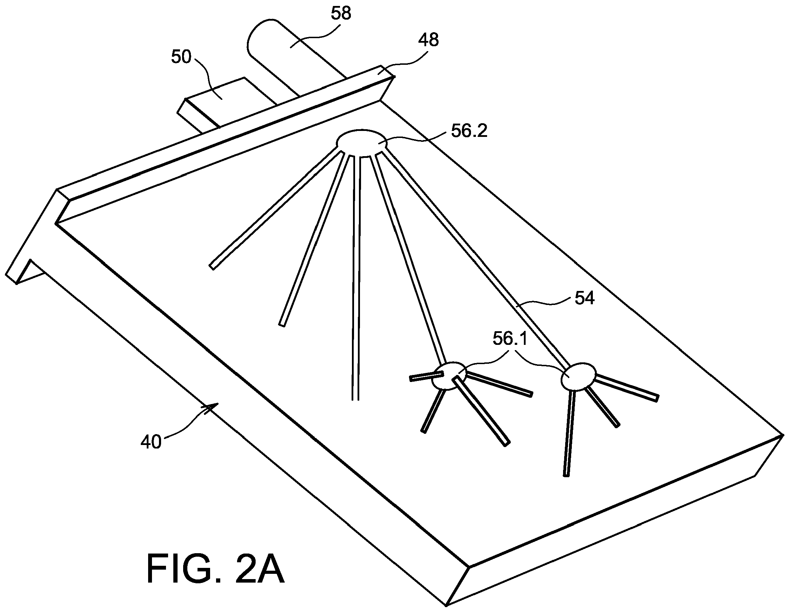

L'âme 40 comporte de manière avantageuse des moyens 52 pour drainer l'oxygène généré à l'anode 42. Ces moyens de drainage 52 sont formés, dans l'exemple représenté, par des rainures 54 réalisées dans chaque face de l'âme et des réservoirs 56, comme on peut le voir sur la figure 2A. Les réservoirs 56 se décomposent en réservoirs intermédiaires 56.1 collectant l'oxygène à différents endroits de l'anode et d'un réservoir principal 56.2 relié à tous les réservoirs intermédiaires 56.1 par des rainures 54 et relié directement à un collecteur d'oxygène 62.

Les rainures 54 et réservoirs 56.1, 56.2 sont avantageusement remplis d'un matériau poreux et bon conducteur électrique, par exemple une mousse métallique 57 afin de permettre à la fois le passage de l'oxygène et le dépôt de la couche formant anode sur les faces de l'âme métallique.

Les rainures 54 sont réalisées sur les faces de l'âme 40 assurant une collecte efficace de l'oxygène de manière uniforme. Celles-ci ont des dimensions variables en fonction de leur longueur et de leur positionnement sur la plaque.

Le réservoir principal 56.2, comme on peut le voir sur la figure 4, est formé par un évidemment traversant rempli de mousse métallique. Celui-ci est relié à un ajutage d'un embout 58 de collecte de l'oxygène par un alésage 60 pratiqué longitudinalement dans l'âme métallique 40.

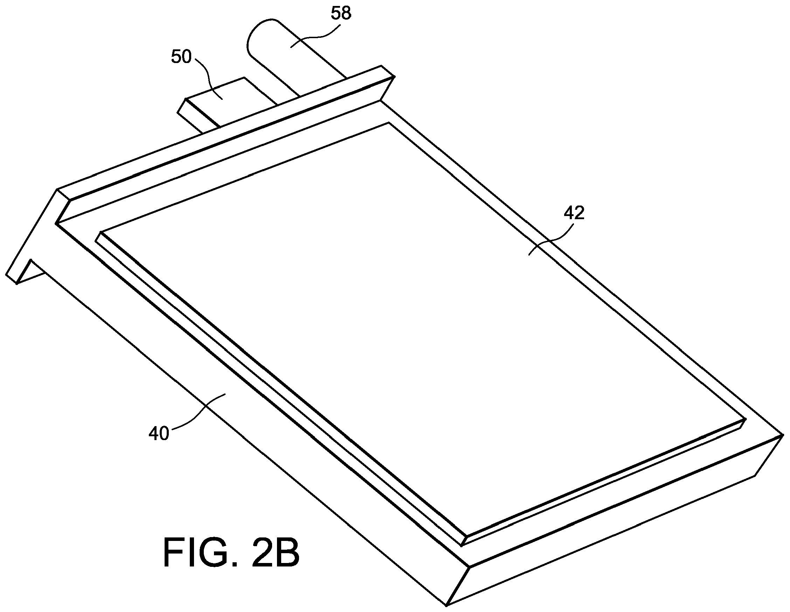

L'anode 42 est du type anode céramique poreuse et très bonne conductrice de l'électricité, par exemple en manganite de lanthane dopée strontium ou matériau équivalent. Celle-ci est déposée en couche mince, de l'ordre du dixième de millimètre, sur l'âme métallique. Sur la figure 2B, on peut voir l'âme métallique 40 recouverte de l'anode 42.

L'électrolyte 44 est étanche et isolant électrique, et bon conducteur ionique, il est par exemple réalisé en zircone stabilisée déposée en couche très mince, par exemple de l'ordre de 40 $\mu$m sur l'anode 42 et en couche. L'électrolyte est déposé en couche plus épaisse sur la partie de l'âme métallique 40 non couverte par l'anode, afin de réaliser une surface plane continue.

La cathode 46 est par exemple en céramique métallique, en nickel, en zircone stabilisée. Celle-ci est déposée en couche mince de l'ordre du dixième de millimètre sur l'électrolyte 44.

Comme nous l'avons indiqué précédemment, la cellule d'électrolyse 8 comporte un embout métallique 58 se raccordant au réservoir principal 56.2. Cet embout 58 est, dans l'exemple représenté directement brasé sur la tête de l'âme 40.

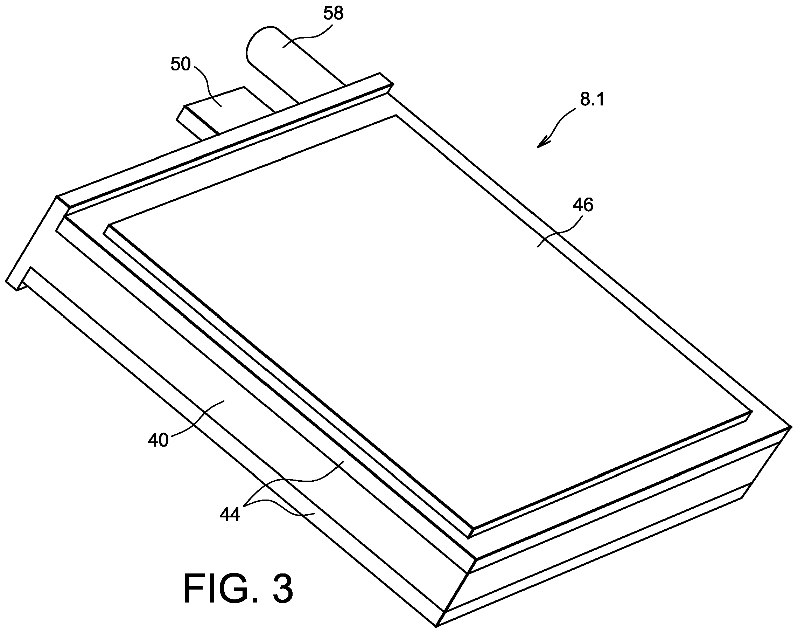

Sur la figure 3, on peut voir le corps central 8.1 complet de la cellule d'électrolyse complète.

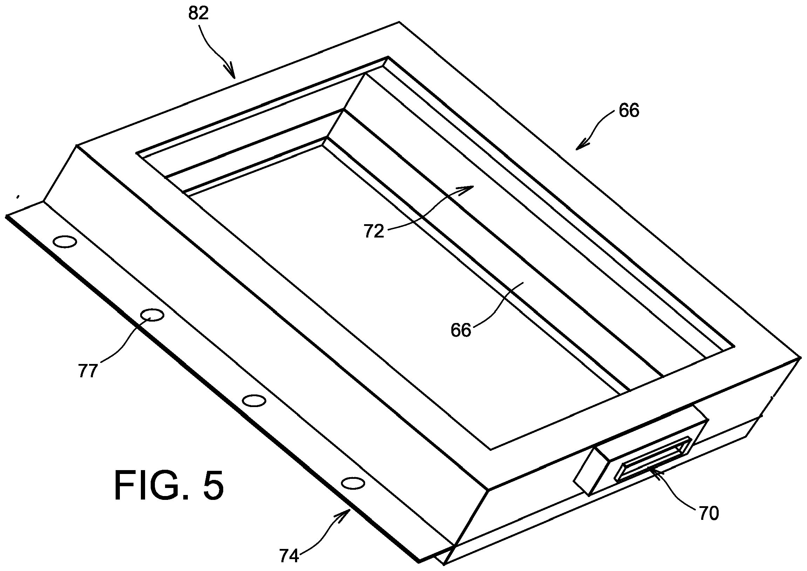

Sur la figure 5, on peut voir le boîtier externe 8.2 en forme de cadre et comportant deux demi-cadres 66 métalliques destinés à venir de part et d'autre du corps central 8.1 et d'un système de fermeture/serrage 68, afin de comprimer le corps central 8.1 entre les deux demi-cadres 66. La compression ainsi réalisé participe à la rigidité de la cellule d'électrolyse.

En outre, le boîtier 8.2 est conducteur électrique par exemple en métal pour assurer de manière continue la liaison électrique entre la cathode 46 et un prise femelle de cathode 70 portée par le boîtier 8.2. La prise femelle de cathode 70 est prévue de manière axialement opposée à la broche d'anode 50. Un joint d'isolation électrique 72 est prévu entre la tête de l'âme métallique 40 et le boîtier 8.2 et entre les flans du corps central 8.1 et le cadre métallique 8.2. L'utilisation du boîtier 8.2 pour relier la cathode à la prise femelle de cathode 70 permet d'éviter de recourir à des câbles de connexions.

Les moyens de serrage sont par exemple du type vis-écrous montés dans des brides latérales 74 des demi-coques 66, ces brides servent également pour la fixation de la cellule sur le cadre support. Un isolant électrique 77 est disposé entre chaque vis et alésage recevant la vis.

Les glissières 22 sont munies de moyens isolant électrique 75 pour isoler les cathodes du caisson et éviter un court-circuit.

Il est à noter que la haute pression de vapeur d'eau va contribuer à plaquer les différentes couches formant le corps central 8.1 de la cellule d'électrolyse très fortement et de manière continue les unes contre les autres, ce qui assure un fonctionnement performant des cellules d'électrolyse 8.

La pression du mélange vapeur d'eau/hydrogène étant beaucoup plus élevée que la pression de l'oxygène collecté par les moyens de drainage, plus la pression du mélange vapeur d'eau/hydrogène contenu dans l'enceinte d'électrolyse est élevée plus la cathode 46 est plaquée de manière forte et continue sur l'électrolyte 44, l'électrolyte 44 sur l'anode 42 et l'anode 42 sur l'âme métallique 40, et donc plus les contacts électriques entre ces différents éléments seront bons. Ceci favorise donc l'obtention de performances élevées et constante dans le temps pour ce type d'électrolyseur. En effet, si on reprend l'expression de la tension à appliquer aux bornes de la cellule d'électrolyse, le terme d'irréversibilité est formé d'un terme de chute ohmique et d'un terme de surtension d'activation $\sum\eta$. Or, à des températures supérieures à 800°C auxquelles l'électrolyseur selon la présente invention travaille, la réaction de dissociation de l'eau est activée par la température, elle ne nécessite donc qu'une très faible surtension d'activation $\sum\eta$, la tension totale aux bornes de la cellule d'électrolyse se réduit alors sensiblement à la somme de la tension à courant nulle et de la chute ohmique, qui varie linéairement avec la densité de courant. Par conséquent, grâce au plaquage de l'électrolyte 44 sur l'anode 42 et de l'anode 42 sur l'âme métallique, le terme de chute ohmique est réduit, le terme d'irréversibilité est donc réduit, ce qui permet de fonctionner avec une endothermicité élevée. La réduction des pertes ohmiques est également obtenue en utilisant une pluralité de petites cellules d'électrolyse montées en série et disposées à courte distance les unes des autres pour réduire le longueur des liaisons électriques, et également en maintenant les canalisations électriques de forte intensité à l'extérieur de l'enceinte pour les maintenir à une température basse.

La présente invention présente également l'avantage de simplifier la réalisation des étanchéités entre les conduits oxygène et les conduits contenant de l'hydrogène et de les rendre plus efficace. En effet, en maintenant un débit suffisant en vapeur d'eau par rapport au débit d'hydrogène formé et en obtenant un mélange vapeur d'eau/hydrogène homogène, les joints d'étanchéité sont soumis au niveau des cellules d'électrolyse à la surpression externe du mélange homogène vapeur d'eau contenant de l'hydrogène, et non à un surpression interne, les étanchéités sont alors plus faciles à réaliser. L'électrolyseur a donc une durée de vie augmentée.

Les cellules d'électrolyse sont préférentiellement de petites dimensions. A titre d'exemple, la cathode peut avoir la forme d'un carré mesurant 5 cm de côté.

Nous allons maintenant décrire l'assemblage en mosaïque ou en matrice des cellules d'électrolyse afin de former une plaque d'électrolyse composite 100.

Selon la présente invention, il est prévu de monter les cellules élémentaires sur un cadre support 102 de manière à former une mosaïque ou une matrice, les cellules 8 sont donc disposées en colonnes et en lignes.

Sur les figures 7A et 7B, on peut voir un exemple de réalisation de deux plaques d'électrolyse 100.1, 100.2 adjacentes dans lesquelles les cellules élémentaires 8 sont montées en série.

La plaque 100.1 est reliée en série à la plaque 100.2.

Dans cet exemple de réalisation, les cellules en colonne sont reliées en série, les colonnes étant elles-mêmes reliées en série.

Comme on peut le voir sur les figures 7A et 7B, toutes les cellules sont sensiblement identiques, cependant les cellules de début et de fin de colonnes diffèrent des autres cellules par le fait que les broches d'anode 50' ou de cathode 70' sont prévues latéralement pour permettre une connexion électrique à une cellule d'une colonne adjacente.

Comme nous l'avons décrit ci-dessus, les cellules hors cellules d'extrémités comportent une broche anode 50 s'étendant axialement vers l'extérieur du boîtier 8.2 et une prise femelle cathode 70.

La broche de cathode 70' de la plaque 100.1 (figure 7A) est reliée électriquement à la broche d'anode 50 de la plaque 100.2 (figure 7B).

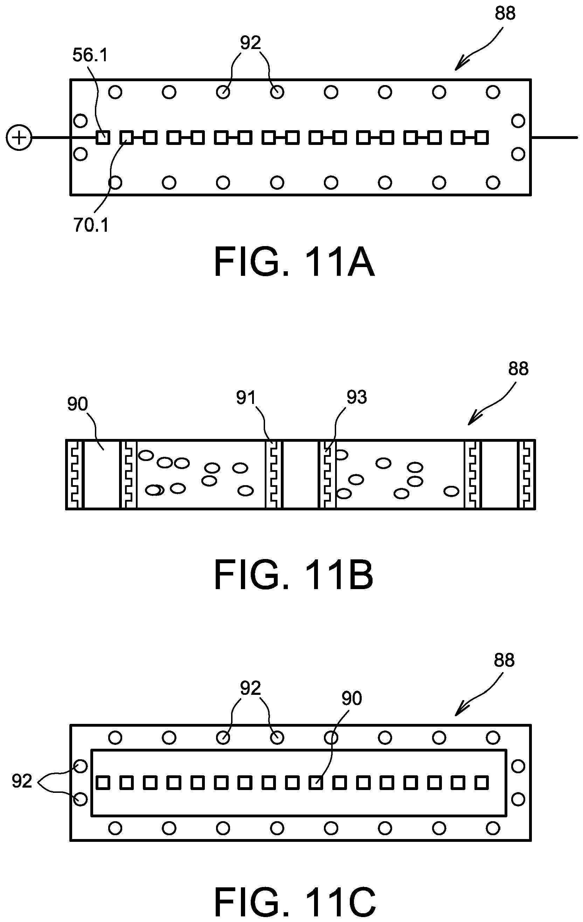

Il est avantageusement prévu de disposer une ou plusieurs plaques de connexion 88 (suivant la longueur de l'électrolyseur) représentées sur les figures 11A à 11C traversées par les broches d'anode 50 et de cathode 70.

Chaque plaque 88 comporte une série d'alésages 90 alignés pour le passage des broches d'anode 50 et des broches de cathode 70'. Par ailleurs, la plaque 88 comporte sur sa périphérie des alésages 92 pour le passage de goujons de serrage 94 pour sa fixation sur la chambre 2 ou 6.

Cette ou ces plaques de connexion 88 et leur joint d'étanchéité et isolant électrique (non représenté sur les figures) assurent l'étanchéité du caisson d'électrolyse et l'isolation électrique des liaisons anode et cathode vis-à-vis du caisson d'électrolyse.

Plusieurs techniques dépendantes du mode de connexion électrique des plaques support d'électrolyse sont possibles pour assurer les deux fonctions étanchéité et isolation électrique des anodes 50 et des cathodes 70.

Dans le cas des deux modes de connexion en parallèle correspondant aux deuxième et troisième modes de connexion qui seront décrits ci-dessous, les broches d'anode d'une plaque de connexion sont au même potentiel électrique, elles peuvent donc être directement brasées dans les alésages de la plaque 88 qui dans ce cas est en acier. Dans ces deux cas, la plaque de connexion électrique est isolée du caisson d'électrolyse par un joint d'isolation électrique.

Dans le cas du montage série, les broches d'anode et/ou les broches de cathode non connectées par le câble d'alimentation électrique d'une même plaque sont isolées électriquement les unes des autres, on peut adopter plusieurs techniques de réalisation : la première est d'utiliser une plaque 88 en céramique haute densité avec des taraudages dans lesquels on viendra visser un manchon métallique 91 et son joint d'étanchéité 93 (fig. 11B), après l'installation de la plaque de connexion 88 sur la chambre supérieure 2 ou la chambre inférieure 6, les broches d'anode et/ou les broches de cathode sont alors brasées dans leur manchon métallique.

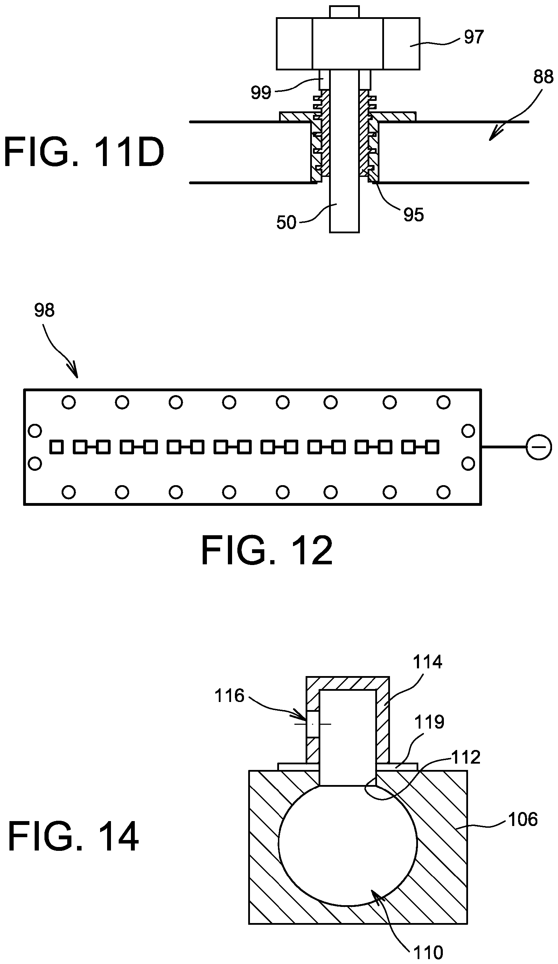

La deuxième technique (figure 11D) consiste à utiliser la technique des étanchéité de passage de câble en utilisant une embase en matériau céramique ou matériau métallique avec dépôt céramique isolant électrique (par exemple en zircone), ce qui permet d'isoler la broche d'anode 50 ou la broche de cathode 70, qui dans ce cas sont de forme cylindrique, la plaque 88 peut être en acier ou être soudée ou vissée avec un joint métallique sur la chambre supérieure 2 ou sur la chambre inférieure 6. Dans ce dernier cas, on peut ne pas utiliser de plaque de connexion 88, les broches d'anode et les broches de cathode cylindriques 50 et 70 étant directement montées sur les chambres 2 ou 6. Le boulon métallique 97, montré avant serrage sur la figure 11D, est vissé sur l'embase et comprime le joint torique réalisant ainsi l'étanchéité.

Sur la figure 11C, on peut voir la plaque 88 avec la connexion en série des plaques d'électrolyse.

La broche d'anode 50.1 de la première plaque d'électrolyse 8 est reliée à l'alimentation électrique (non représentée), la broche de cathode 70.1' de la deuxième plaque d'électrolyse 8 est reliée à la broche d'anode 50.1 et ainsi de suite

Une partie des câblages peut se faire à l'intérieur du caisson pour réduire les pénétrations et les étanchéités.

Les broches 50, 70 sont brasées dans leur logement, les conduits 14, 30 d'écoulement du caloporteur sont sertis ou brasés pour former les canaux distributeur et collecteur ainsi que les conduits d'oxygène 16, 34.

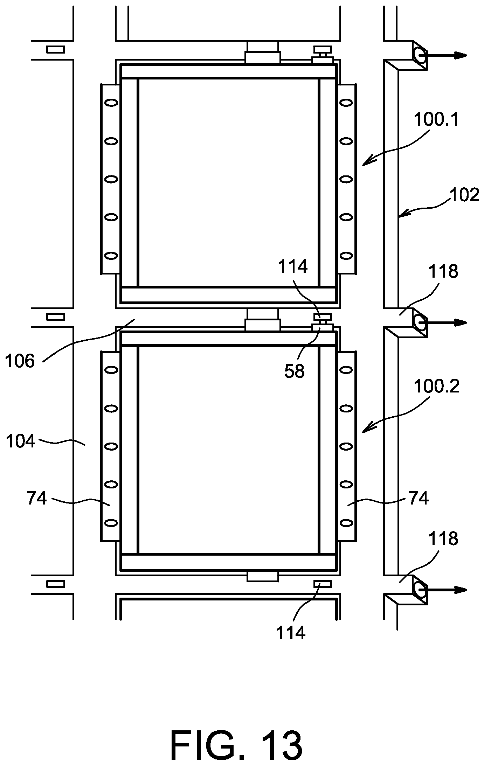

Sur la figure 13, on peut voir un détail d'une plaque d'électrolyse selon la présente invention.

Les cellules élémentaires sont montées dans un cadre support 102 comportant des montants verticaux 104 et horizontaux 106 délimitant des fenêtres 108 de forme rectangulaire, ayant sensiblement la taille des cellules d'électrolyse 8.

Les cellules 8 sont fixées sur les montants verticaux dans l'exemple représenté, au moyen des brides 74 par des embases vissées dans le cadre, par exemple en céramique ou en acier recouvert de céramique, dans lesquelles sont vissées des vis traversant les brides des cellules.

Un isolant électrique est interposé entre les montants 104, 106 et les brides 74, afin d'isoler la cathode 46 du cadre support.

Lors du montage des cellules 78, celles-ci sont approchées du cadre support de telle sorte, que la broche d'anode 50 de la cellule approchée pénètre dans la prise mâle de cathode 70. Par contre, les cellules de début et de fin de colonne comportant une cathode latérale 70' qui sont montées horizontalement sur le cadre support 102.

Comme représenté, il est particulièrement avantageux de réaliser des cellules d'électrolyse en forme de pavé carré de dimension réduite afin de pouvoir les disposer plus aisément sur les cadres support, notamment pour les cellules de début et de fin de colonne.

Il est prévu dans un exemple de réalisation particulièrement avantageux d'une plaque d'électrolyse selon l'invention, d'utiliser le cadre support 102 comme conduit pour la collecte d'oxygène. Pour cela, les montants horizontaux 106 et verticaux 108, sont creux et les embouts de collecte d'oxygène 58 sont connectés à ces montants 106.

Sur la figure 14, on peut voir un vue en coupe transversale d'un montant 106 creux muni d'un raccord 114 à une cellule d'electrolyse 8.

Le montant 106 comporte un canal longitudinal 110 et un perçage 112 latéral débouchant dans le raccord 114 rapporté sur le montant 106.

Ce raccord comporte lui-même un alésage de raccordement 116 pour le passage de l'embout de collecte d'oxygène 58. Un joint isolant électrique 119 est disposé entre le raccord 114 et le montant 106 pour isoler l'anode du cadre 102.

Lors du montage d'une cellule 8 sur le cadre support, l'embout de collecte d'oxygène est enfiché dans l'alésage 116 du raccord 114, puis un brasage est effectué pour rendre étanche le raccordement.

Afin de simplifier le montage, les cellules d'extrémité comportent un embout de collecte d'oxygène latéral parallèle à la broche d'anode ou de cathode, et se connecte à un raccord fixé sur un montant vertical 104.

Le barreau horizontal supérieur du cadre support 102 comporte un ou plusieurs embouts 118 de refoulement de l'oxygène collecté dans le cadre support traversant la chambre supérieure (figures 7A et 7B).

Ainsi, on réalise simplement des moyens de collecte de l'oxygène produit aux anodes et son évacuation vers l'extérieur de l'électrolyseur.

De manière avantageuse, il est prévu que le demi-cadre inférieur du boîtier de toutes les cellules soit de plus faible profondeur que le demi-cadre supérieur pour faciliter le montage de la cellule sur le cadre support.

Le cadre support est par exemple en métal, celui-ci peut être peut être forgé avec des barreaux pleins, puis les montants horizontaux 106 et verticaux 104 sont alésées pour former un réseau de canaux communicants entre eux. Des profilés de fermeture sont ensuite soudés sur les quatre cotés du cadre support pour réaliser l'étanchéité du cadre support.

Les profilés latéraux supportent des guides métalliques 120 destinés à être montés dans les glissières latérales 22 du caisson médian 4.

Le montage en série des cellules d'électrolyse 8 d'une plaque 100 permet de faire circuler dans les cellules 8 et les contacteurs un courant de faible intensité correspondant à l'alimentation d'une seule cellule (10 A pour une colonne constituée de dizaines de cellules double faces de 0.05 m par 0.05 m avec une densité de courant de 2000 A/m2), ce qui limite considérablement la puissance électrique dissipée sous forme de chaleur dans les anodes les cathodes et au niveau de leur contacteur.

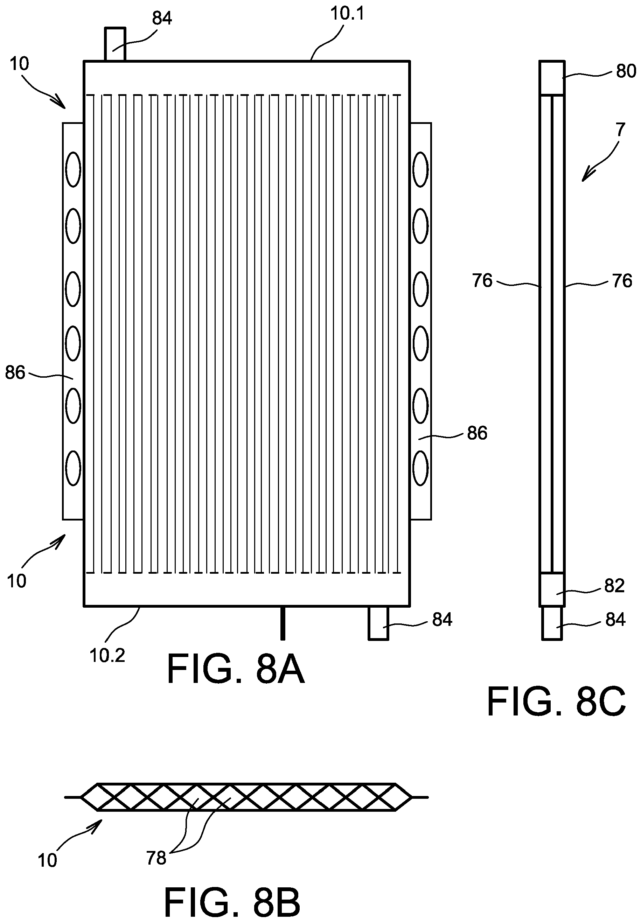

Nous allons maintenant décrire une plaque de chauffage 10 selon l'invention représentée sur les figures 8A à 8C. La plaque de chauffage comporte deux tôles 76, par exemple en en acier 800 H ou en hastelloy et soudées sur toute leur périphérie.

Entre les deux tôles 76, est disposé un corps d'échanges thermiques 78 comportant une ou plusieurs centaines de canaux s'étendant longitudinalement entre une extrémité supérieure 10.1 et une extrémité inférieure 10.2.

Un collecteur d'admission 80 du caloporteur chaud est prévu au niveau de l'extrémité supérieure 8.1 et un collecteur de refoulement 82 du caloporteur froid est prévu au niveau de l'extrémité inférieure 8.2.

Des embouts 84, 86 sont prévus sur les collecteurs d'admission 80 et de refoulement 82, avantageusement ces embouts 84, 86 sont métalliques, brasés sur les collecteurs 80, 82.

Par ailleurs, deux guides 86 sont prévus sur les côtés latéraux de la plaque de chauffage 10 pour pénétrerdans les glissières 24 du caisson médian 4.

Le fluide caloporteur circulant dans les plaques de chauffage est avantageusement un gaz à pression légèrement inférieure à celle du bain électrolytique, par exemple de l'hélium.

Nous allons tout d'abord nous référer à la figure 7A.

La chambre inférieure 6 est fixée sur le caisson médian 4. La plaque d'électrolyse 100 est ensuite insérée dans le caisson médian 4 en faisant coulisser ses guides latéraux 74 dans les glissières 22.

La broche de cathode 70 pénètre dans l'ouverture 35 pratiquée à cet effet dans la chambre inférieure 6 dans le canal de refroidissement 36.

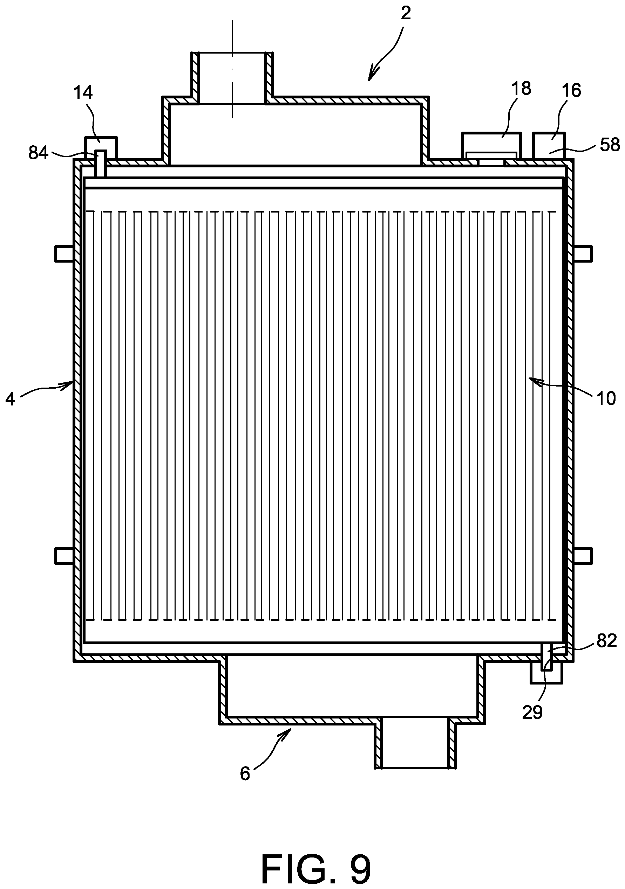

La plaque de chauffage 10 est ensuite insérée dans les glissières adjacentes 24 comme on peut le voir sur la figure 9, l'embout de sortie du caloporteur froid 86 traverse l'ouverture 29 prévue dans la chambre inférieure 6.

Ensuite une autre plaque d'électrolyse 100 est introduite dans le caisson médian 4, cette fois-ci de telle sorte que la broche d'anode 50 traverse une ouverture 35, comme cela est représenté sur la figure 7B.

Ensuite une nouvelle plaque de chauffage 10 est introduite de manière adjacente et de la même manière que la plaque de chauffage précédente et ainsi de suite, jusqu'à ce que le caisson soit rempli.

La chambre supérieure 2 est ensuite disposée sur le caisson médian 4 de telle sorte que les broches d'anode 50 de cathode 70 traversent les ouvertures 19, les embouts de collecte de l'oxygène 58 traversent les ouvertures 15 et les embouts d'alimentation en caloporteur chaud 84 traversent les ouvertures 13.

La chambre supérieure 2 est alors boulonnée hermétiquement sur le caisson médian 4.

Les embouts d'admissions 84 sont brasés sur la face supérieure du renfoncement 11 de la chambre supérieure, ils sont ainsi reliés au canal caloporteur chaud. Le brasage permet d'éviter de devoir à recourir à des moyens d'étanchéité supplémentaire, la durée de vie de l'électrolyseur en est donc augmentée.

Le conduit de caloporteur chaud 14 est relié à une source de caloporteur chaud, le conduit de collecte de l'oxygène 16 est relié à un réservoir de stockage de l'oxygène, le conduit principal 20 est relié à un réservoir de récupération du mélange eau/hydrogène.

Les broches d'anode 50 et de cathode 70 débouchant de la chambre supérieure 2 sont reliées comme représentées sur la figure 11, le canal de refroidissement 18 ayant été omis. Cette connexion électrique permet un montage en série des plaques d'électrolyse 8.

Les renfoncements dans les chambres supérieure 2 et inférieure 6 présentent l'avantage de réduire la longueur des broches d'anode et de cathode et ainsi de réduire les pertes par effet Joule.

Les plaques de connexion 88, 98 munies de leur joint d'étanchéité 89 sont glissées sur les broches 50, 70 des plaques d'électrolyse puis vissées sur les chambres supérieure et inférieure.

Les broches 50, 70 sont brasées dans leur logement, les conduits 14, 30 d'écoulement du caloporteur sont sertis ou brasés pour former les canaux distributeur et collecteur ainsi que les conduits d'oxygène 16, 34.

Les canaux de circulation du caloporteur chaud et froid, d'évacuation de l'oxygène et de refroidissement des contacteurs électriques sont montés sur leur conduit respectif.

Pour une densité de courant de 2000 A/m$^2$ et des cellules carrées double faces de 0,05 m. de côté, l'intensité du courant traversant les différentes jonctions n'est que de 10 A, ce qui a pour avantage de permettre de réduire les pertes aux niveaux de l'âme métallique 40, des dépôts sur l'anode, l'électrolyte et la cathode. Par ailleurs la réalisation d'une cellule étanche et rigide est simplifiée par la réduction de ses dimensions.

Grâce à la présente invention et à la mise en oeuvre d'un grand nombre de cellules élémentaires de petites dimensions montées en série, il possible de limiter la puissance électrique dissipée sous forme de chaleur et de limiter l'intensité du courant électrique traversant les différentes cellules de l'électrolyseur et notamment les nombreuses connexions métalliques entre les cellules d'électrolyse.

En effet, si on considère n cellules élémentaires de surface de cathode s montées en série, l'intensité du courant I traversant toutes les cellules est égale à l'intensité I nécessaire à l'alimentation d'une seule cellule :

Soit I=s*j où j est la valeur de densité de courant.

Soit r la valeur de résistance d'une cellule et de ses contacteurs, la résistance équivalente de l'ensemble des cellules montée en série est R=n*r et la puissance dissipée est Q=n*r*(j*S)$^2$,

Si on veut réaliser à densité de courant constante un électrolyseur ayant la même capacité de production que les n cellules mais avec k fois moins de cellules, la surface de cathode de chaque cellule doit être multipliée par k et la puissance électrique dissipée sous forme de chaleur dans cette configuration est alors :

$$Q1= (n/k)*r*(j*k*s)^2=k*Q.$$

C'est à dire que la puissance électrique dissipée sous forme de chaleur est multipliée par k.

Ainsi pour un courant de 4 kA, ce qui ne correspond qu'à une production d'hydrogène de 0.021 mol/s, correspondant à une plaque double face de 1m*1m avec une densité de courant de 2 kA/m2 et un cermet ayant une résistivité de 1*10$^{-3}$ Ω*cm la perte de potentiel pour un élément conducteur de 1 cm de long et 1 cm$^2$ de section est de 4 V et la puissance électrique perdue sous forme de chaleur dans le connecteur est 16 kW, ce chiffre est à comparer à la valeur de puissance d'endothermicité à 900°C pour une production de 1 mol/s c'est à dire 42 kW. Alors que, grâce à la présente invention, en réalisant cette section de l'électrolyseur avec 400 cellules carrées de 5 cm de côté avec 400 connecteurs identiques à la précédente (1 cm de long et 1 cm$^2$ de section) on obtient la même valeur de perte de tension pour l'ensemble des cellules, mais la puissance électrique perdue n'est alors que de 40 W.

Par ailleurs, le fonctionnement sous haute pression permet de réduire la consommation électrique de l'usine en réduisant les installations nécessaires à la compression du gaz en sortie de l'électrolyseur pour son stockage et son transport, puisque celui-ci peut sortir à une pression sensiblement proche de la pression de stockage et de transport. Par ailleurs la compacité de l'installation est améliorée.

En outre, les pertes de charge sont réduites comme cela a déjà été expliqué.

Le caloporteur et le mélange vapeur d'eau/hydrogène peuvent être en écoulement co-courant, l'entrée du caloporteur chaud s'effectue du même côté que le mélange vapeur d'eau/hydrogène, ou à contre-courant, l'entrée du caloporteur chaud s'effectuant du côté opposé à l'entrée du mélange vapeur d'eau/hydrogène.

La réalisation de l'électrolyseur selon l'invention permet de moduler le couple tension/intensité aux bornes de l'électrolyseur, il est bien évidemment variable en fonction du nombre de plaques connectées en série. Il faut souligner que les caractéristiques d'isolation de chaque cellule, donc son épaisseur et son coût de réalisation, dépendent de la tension du courant qui la traverse afin d'éviter l'apparition d'arcs électriques.

Dans le cas où l'on souhaite réaliser un électrolyseur compact avec de faible épaisseur d'isolant électrique on peut connecter toutes les plaques 100 en parallèle, puisque le montage en mosaïque permet de reporter la contrainte des fortes valeurs d'intensité du courant d'alimentation uniquement sur le conducteur d'alimentation de l'électrolyseur, qui peut être réalisée avec une très grande section et maintenu par refroidissement à basse température.

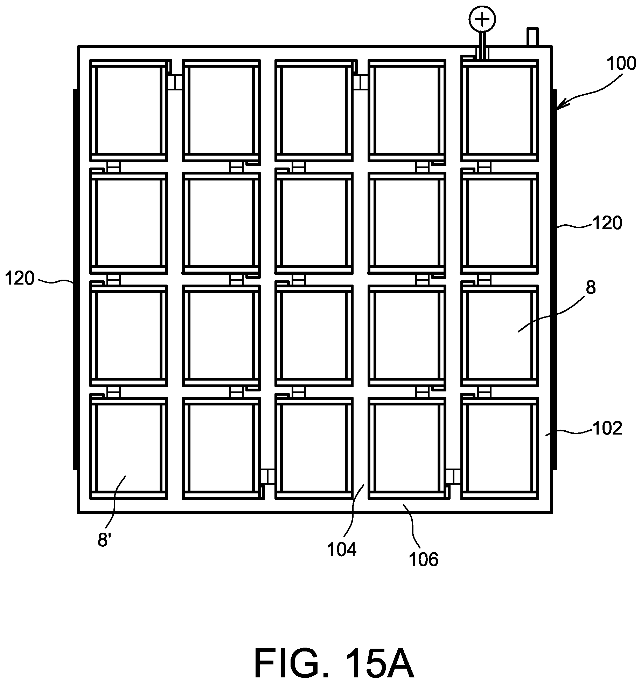

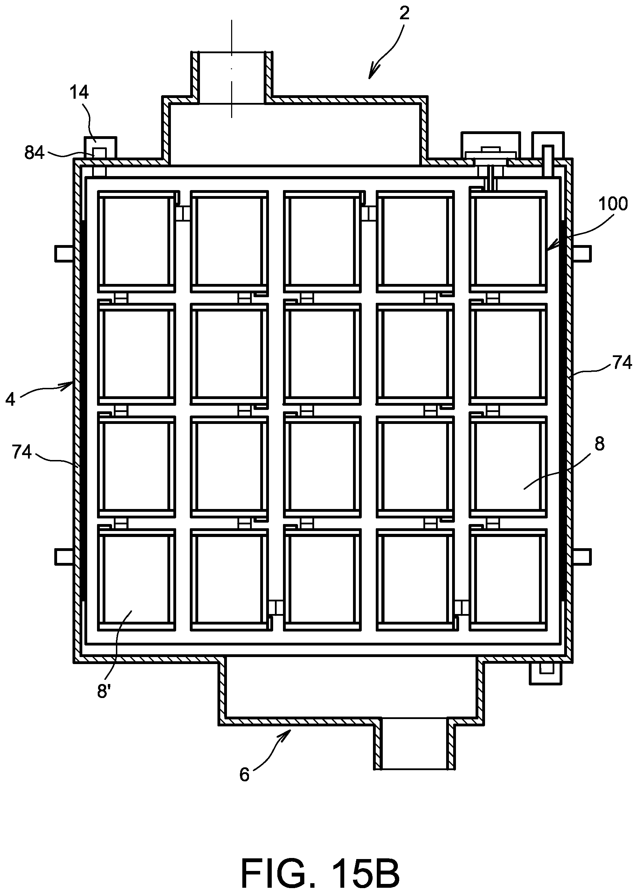

Dans un deuxième mode de réalisation, on prévoit de connecter en parallèle les plaques d'électrolyse, comme cela est représenté sur les figures 15A et 15B. Par rapport aux plaques d'électrolyse en série, la dernière cellule 8' de la dernière colonne est reliée à la masse et non à la première cellule de la première colonne de la plaque d'électrolyse adjacente.

En effet, on constate à partir de l'exemple suivant que, pour une installation ordinaire sur un réseau ordinaire 380 V triphasé, il est aisé, moyennant l'utilisation d'un pont de diodes en amont de l'électrolyseur et d'un système de protection, d'adapter directement l'électrolyseur à la tension disponible à partir du réseau électrique en calculant le nombre de cellules par cadre support (de l'ordre de 205 cellules pour du 220 V dans le cas d'un montage domestique en étoile). De multiples combinaisons entre le nombre de cellules en série sur une plaque et le nombre de plaques sont possibles.

Il est très avantageux de connecter les plaques support en parallèle, ainsi le nombre de cellules par plaque dépend de la tension du réseau et le nombre de cadres supports dépend de la puissance de production de l'unité.

Le montage en parallèle a pour avantage de repousser la contrainte liée aux courants de forte intensité en dehors de l'enceinte à très haute température ce qui rend les solutions techniques très aisées, pour cela il suffit d'utiliser les conducteurs métalliques de grosse section à basse température.

Il est également possible de diminuer le nombre de pénétrations dans l'enceinte de conducteurs métalliques en regroupant les plaques d'électrolyse 100 par petits groupes sur un seul conducteur principal.

L'électrolyseur selon la présente invention ne nécessite donc pas d'autre installation électrique si ce n'est un redresseur de courant qui peut être intégré à l'appareil.

Lorsque des tensions plus élevées sont souhaitées, il est possible d'utiliser de très grandes plaques ou de mettre plusieurs cadres supports en série de telles sortes que leurs broches d'anode traversent pour l'une la chambre supérieure et pour l'autre la chambre inférieure.

Nous allons maintenant donner un exemple de dimensionnement d'un électrolyseur selon la présente invention pouvant produire 5 mole/sec, soit 432 Nm3/heure d'hydrogène à l'aide de cellules $10 \times 10$ cm$^2$ de 1,53 cm d'épaisseur, par plaque les cellules sont connectées en série.

Les plaques métalliques de support, par exemple acier 800H ou en hastelloy mesurent 2,61 m de hauteur et 1,81 m de largeur pour une épaisseur de 10 mm.

Les plaques de chauffage 10 ont les mêmes dimensions (hauteur et largeur) que les plaques support et leur épaisseur est de 7,6 mm.

L'espace entre plaque de chauffage et cadre de cellule d'électrolyse, de l'ordre de 5 mm, est maintenu constant à l'aide de cales en matériau isolant électrique.

Chaque plaque d'électrolyse comporte 300 cellules disposées sur 15 colonnes verticales et 20 rangées horizontales. Pour une densité de courant de 2000 A/m2, l'intensité du courant traversant l'ensemble des cellules d'une plaque est de 40 A, la tension aux bornes d'une plaque est de l'ordre de 316 volts.

Il y a 81 plaques d'électrolyse montées en parallèle et 82 plaques de chauffage 10.

Les glissières latérales 22, 24 faisant 1 cm, les dimensions (internes) du caisson d'électrolyse sont les suivantes :

- Hauteur 2,61 m,
- Largeur 1,83 m,
- Longueur 2,70 m.

La puissance électrique à fournir à l'électrolyseur est de 1,023 MW et la puissance thermique à apporter est de 213 kW (à 850°C).

Le débit d'eau vapeur alimentaire à 850 °C sous 30 bars est de 25 mol/s sa vitesse d'écoulement entre plaque de chauffage et plaque d'électrolyse de l'ordre de 4,5 cm/s et la perte de charge du mélange vapeur d'eau hydrogène à travers l'électrolyseur est de l'ordre de 50 mbar.

Avec 294 mol/s comme valeur de débit de caloporteur, ici de l'hélium alimentaire à 900°C sous 30 bars, la température de sortie du mélange hydrogène est de 852 °C la vitesse d'écoulement de l'hélium dans les canaux de l'échangeur est de l'ordre de 3,2 m/s et sa perte de charge à travers l'échangeur est de l'ordre de 400 mbar.

On peut voir sur le graphique de la figure 21 que, tout au long d'une plaque de 2,61 m de hauteur, l'amplitude maximale de variation de la température n'est que de 30,4 °C. En trait plein, il s'agit de la température du mélange vapeur d'eau/hydrogène et en tirets la température du fluide caloporteur.

L'exemple décrit ci-dessus n'est qu'un point de fonctionnement, il est possible en diminuant le débit d'eau alimentaire d'augmenter la pression partielle d'hydrogène.

A titre d'exemple, grâce à l'invention avec une chaudière délivrant un caloporteur à 900°C on peut maintenir tout l'électrolyseur dans une gamme de haute température réduite [850°C-880°C] avec un débit de vapeur d'eau de seulement cinq fois le débit d'hydrogène produit tout en apportant 42 kJ par mole d'hydrogène produit sous forme de chaleur, soit un cinquième de l'énergie électrique consommée (204 kJ/mole H2, le reste : 41 kJ/mole H2, est fourni par la vaporisation de l'eau en amont de l'électrolyseur par apport de chaleur dans un générateur de vapeur.

On recherchera particulièrement un rapport de débit molaire vapeur d'eau/hydrogène produit dans l'intervalle 2 à 5, pour obtenir une pression de vapeur partielle d'hydrogène élevée tout en assurant un bon recouvrement des plaques d'électrolyse par la vapeur d'eau.

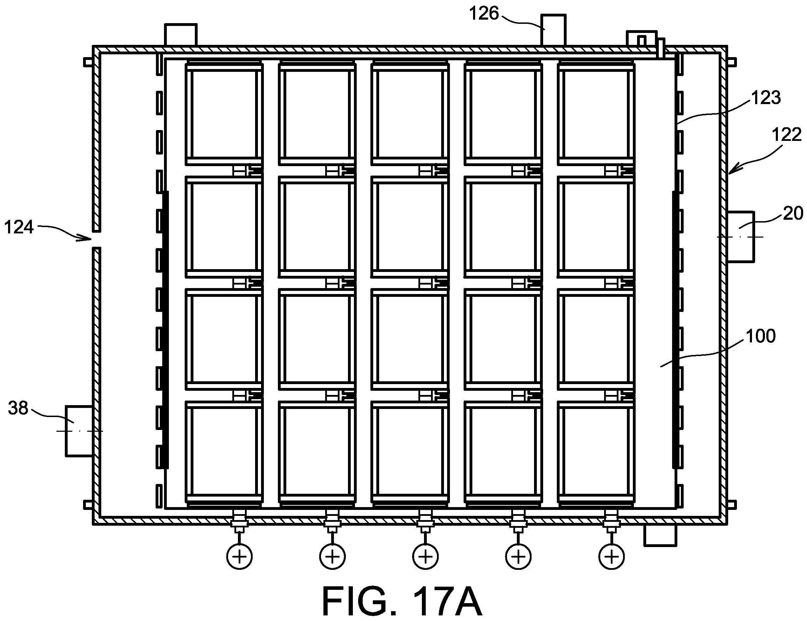

Nous allons maintenant décrire un troisième mode de réalisation particulièrement avantageux représenté sur les figures 17A à 19 dans lequel chaque colonne de chaque cadre support est reliée en parallèle entre elles. Les connexions électriques n'ont lieu dans l'exemple représenté qu'au niveau de la paroi inférieure de l'enceinte.

Ce mode de réalisation est particulièrement intéressant pour réaliser de très grosses unités de production pour lesquelles on ne désire pas multiplier le nombre de plaques et le nombre de plaques de chauffage.

Dans le cas de très grandes plaques support comportant un grand nombre de cellules en série, des valeurs importante de différence de potentiel entre cadre support et cellules sont atteintes, puis entre cellule et plaque de chauffage augmentant les risques d'établissement d'arcs électriques entre ces différents éléments.

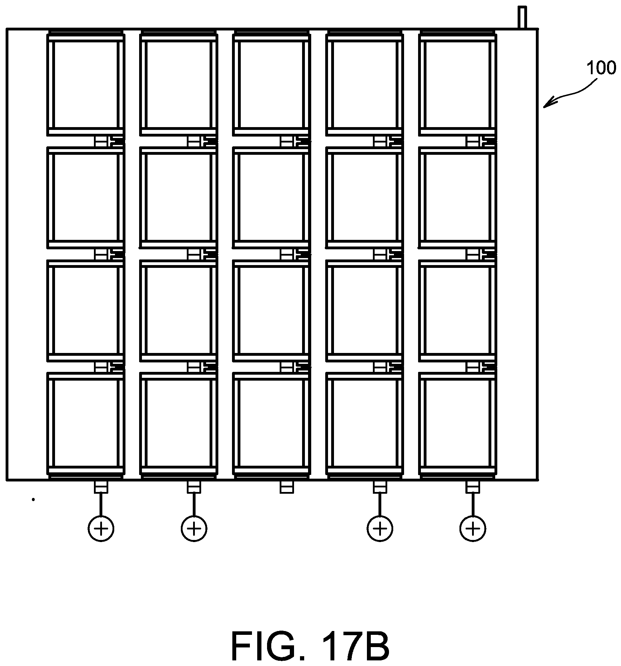

Selon le troisième mode de réalisation représenté sur les figures 17A et 17B, on met en série dans chaque colonne d'une plaque un nombre de cellules inférieur au nombre de claquage, ce nombre correspond au nombre de cellules en série correspondant à la tension de claquage ; les colonnes sont ensuite toutes connectées en parallèle d'un cadre support à l'autre.

Dans ce troisième mode de réalisation, il est prévu de réaliser l'alimentation en vapeur d'eau de manière latérale

Le caisson médian 4 comporte alors un baffle d'alimentation 122 et une plaque de répartition 123 de la vapeur d'eau permettant une distribution régulière en vapeur d'eau sur toute la hauteur des plaques d'électrolyse. Le caisson médian 4 comporte également un baffle de sortie 124 de l'eau mélangé à l'hydrogène produit.

Il est également prévu de manière avantageuse un collecteur 126 de sortie de l'eau mélangé à l'hydrogène sur la partie supérieure de l'enceinte, ce qui permet de collecter un mélange de vapeur très riche en hydrogène, mais également d'éviter la formation d'un ciel d'hydrogène en haut de l'enceinte.

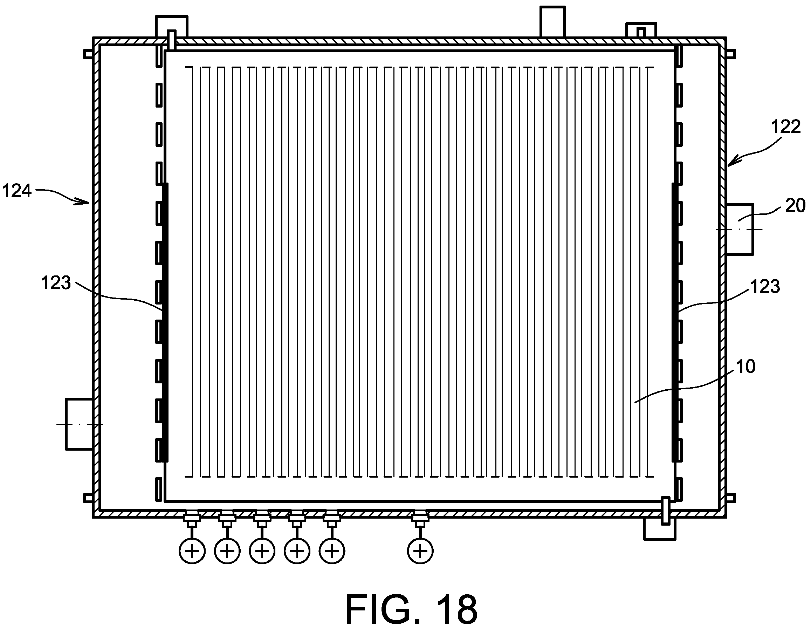

Sur la figure 18, on peut voir le montage d'une plaque de chauffage 10 dans un électrolyseur selon ce mode de réalisation à alimentation latérale.

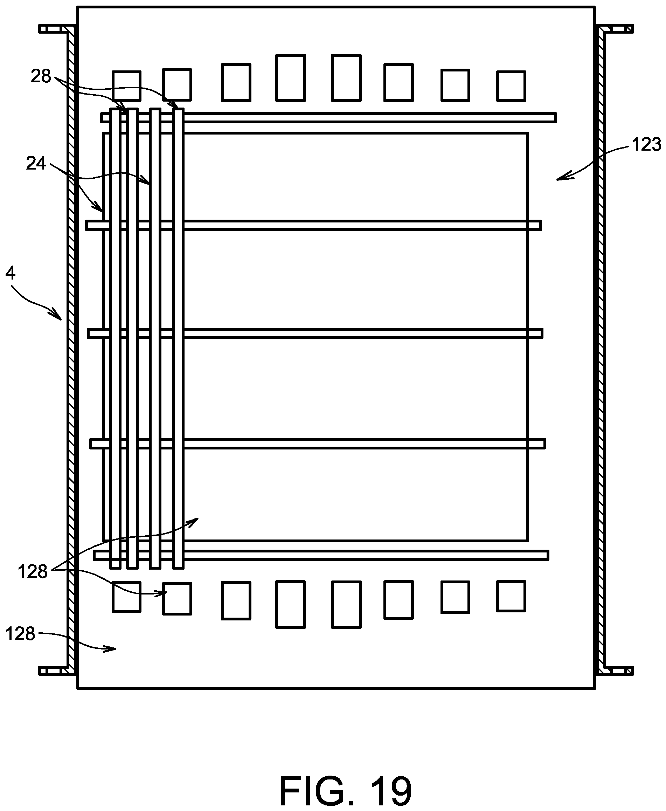

Sur la figure 19, on peut voir une plaque de répartition 123 du gaz actif avec ses lumières de passage 130 du gaz et les glissières soudées sur des barres horizontales.

Il est bien entendu que l'alimentation latérale du troisième mode de réalisation peut s'appliquer à l'électrolyseur selon le premier et deuxième mode de réalisation.

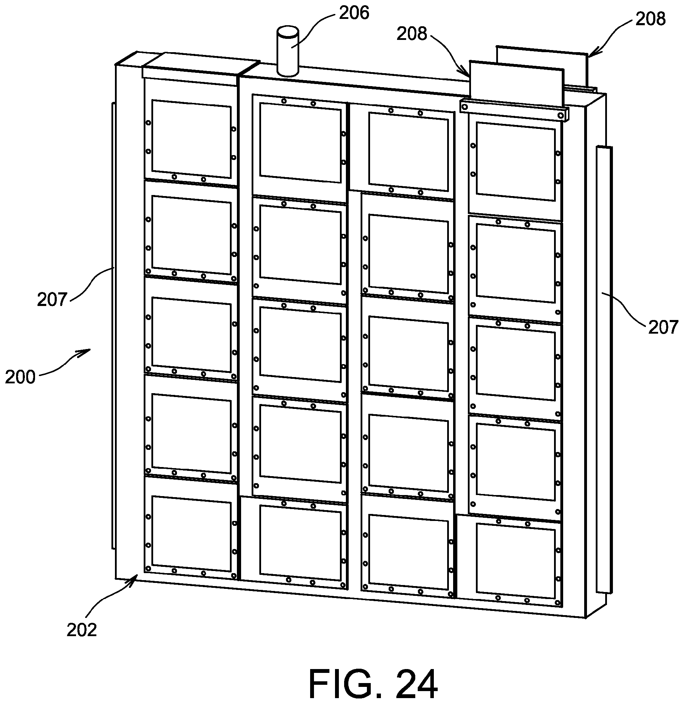

Sur les figures 24 à 26C, on peut voir un quatrième mode de réalisation d'une plaque d'électrolyse selon la présente invention, ayant l'avantage d'offrir une résistance de connexion intercellule très faible, d'être de fabrication très simple et d'une grande modularité.

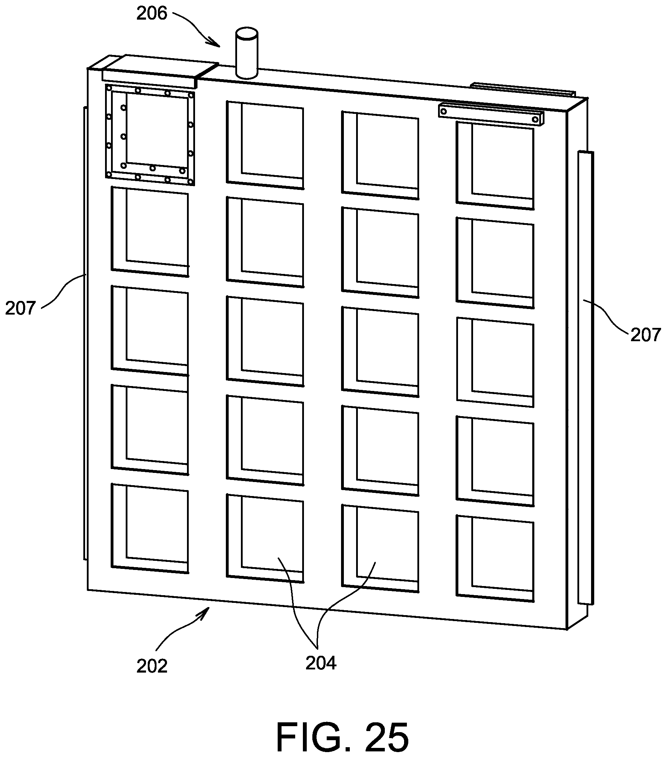

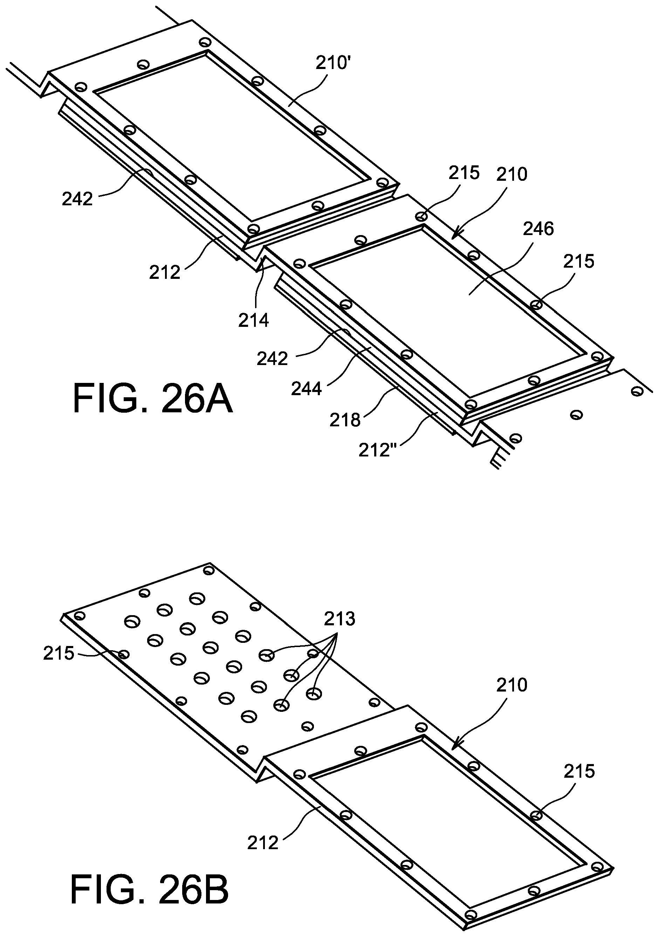

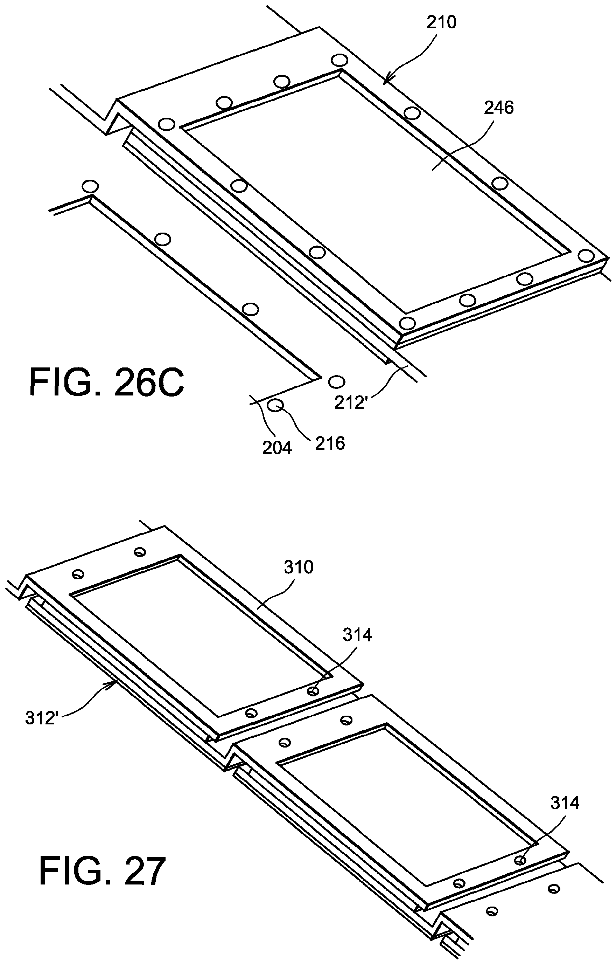

Sur la figure 24, on peut voir une plaque d'électrolyse complète. Sur la figure 25, on peut voir une plaque support formant le châssis de la plaque d'électrolyse et sur les figures 26A à 26C, on peut voir les cellules d'électrolyse isolées du châssis.

La plaque d'électrolyse 200 comporte une plaque support 202 munie de fenêtres 204 réparties en ligne et en colonne sur ses deux faces.

En outre, la plaque support 202 est creuse de sorte à former un collecteur du dioxygène produit aux anodes comme nous le verrons par la suite.

Avantageusement, des montants et des traverses de renfort sont prévus pour rigidifier la plaque support, ceux-ci étant disposés de sorte à ne pas gêner la circulation du dioxygène.

La plaque support comporte également un collecteur du dioxygène 206, formé dans l'exemple représenté, par un manchon sur la partie supérieure de la plaque support 202, ainsi que des broches 208 de connexion anodique et cathodique aux autres plaques d'électrolyse pour un montage en série ou à l'alimentation de l'électrolyseur pour un montage en parallèle.

La plaque support 202 peut être réalisée en métal ou en céramique.

La plaque d'électrolyse comporte également des guides latéraux 207 de montage dans l'enceinte de l'électrolyseur.

Si la plaque support 202 est en métal et que l'on souhaite un montage en série des différentes plaques d'électrolyse, la connexion à la masse peut se faire par les guides latéraux 207, les plaques ne comportant alors qu'un connecteur anode.

Les plaques en céramique peuvent, quant à elles, comporter un connecteur anodique et un connecteur cathodique.

Sur les figures 26A à 26C, on peut voir les cellules d'électrolyse 208, celles-ci comportent un électrolyte central 244 en forme de plaque, recouvert sur une face par une cathode 246 et sur une face opposée une anode (non visible).

L'électrolyte est avantageusement plus épais sur ses bords latéraux pour le montage.

Dans ce mode de réalisation, l'électrolyte comporte avantageusement des bords plus épais, ce qui permet de réaliser l'étanchéité latérale de l'ensemble. Comme nous le verrons par la suite, les vis de montage ne traversent que l'électrolyte ce qui simplifie le montage.

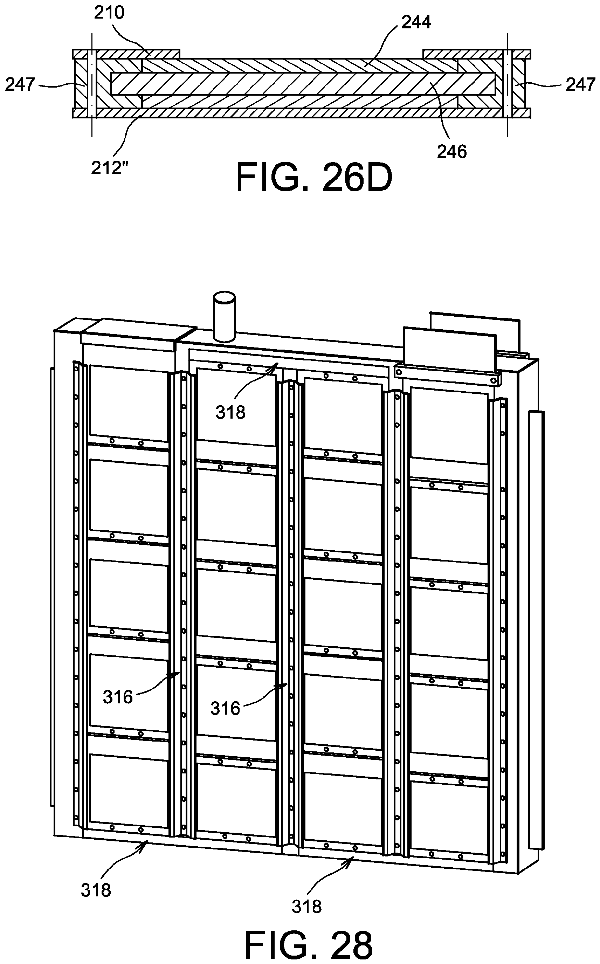

On pourra prévoir un joint périphérique supplémentaire entourant l'électrolyte pour augmenter l'étanchéité de l'ensemble. On peut également prévoir de réaliser l'étanchéité uniquement au moyen d'un joint périphérique 247, comme représenté sur la figure 26D, ce joint est du type joint à lèvre enserrant les bords de l'électrolyte 244. Cet exemple de réalisation présente l'avantage d'utiliser un électrolyte de taille réduite et de forme simplifiée.

Selon ce mode de réalisation, une cellule d'électrolyse est connectée électriquement à une cellule suivante par un conducteur électrique de grande section.

La cellule comporte un cadre métallique 210, disposé sur la cathode 246 se prolongeant par une plaque munie de trous 213, désignée par la suite plaque perforée 212 recouvrant l'anode d'une cellule adjacente 208'. Le cadre appuie à la fois sur les bords de l'électrolyte et la cathode ; la plaque perforée appuie à la fois sur l'anode et sur les bords de l'électrolyte. En cas de présence d'un joint périphérique supplémentaire, le joint est comprimé entre le cadre et la plaque perforée.

Le cadre 210 recouvre les bords extérieurs de la cathode 246 et laisse la majeure partie des électrodes dégagée pour les réactions d'électrolyse. Les perforations de la plaque perforée 212 permettent le passage du dioxygène formé à l'anode.

Dans l'exemple représenté, le cadre 210 et la plaque perforée 212 sont dans deux plans décalés raccordés par une patte 214 sensiblement orthogonale au deux plans. De manière avantageuse, le cadre 210, la plaque 212 et la patte 214 sont réalisés d'une seule pièce par emboutissage.

Dans l'exemple représenté, le cadre 210 et la plaque perforée 212 comportent des taraudages pour la fixation à une plaque perforée 212' et à un cadre 210' respectivement, le cadre 210' et la plaque perforée 212" n'appartenant pas à la même cellule, des taraudages 214 sont réalisés dans l'électrolyte.

L'assemblage des cellules d'électrolyse assure l'application d'un effort de compression sur chaque ensemble anode-électrolyte-cathode.

Les taraudages 212, 214 servent au montage de tous les éléments de chaque cellule sur la plaque support. Les vis sont électriquement isolées des éléments des cellules.

Les cellules sont montées sur la plaque support 202 de sorte que l'anode de chaque cellule soit orientée vers l'intérieur de la plaque support 202, ce qui permet la collecte du dioxygène par la plaque support 202. On prévoit alors un joint d'étanchéité 218 entre chaque cellule et la périphérie de chaque fenêtre. Ce joint est comprimé du fait du montage par serrage. Le joint d'étanchéité est également un isolant électrique.

La forme et la disposition des fenêtres ainsi que celles de la face des plaques perforées qui viennent s'appliquer sur les fenêtres peuvent être optimisée pour une meilleure étanchéité et une meilleure circulation de l'oxygène.

On peut prévoir avantageusement des rainures d'étanchéité sur les fenêtres recevant le joint. On peut prévoir également de réaliser des fenêtres avec des bords chanfreinés, ce qui permet d'utiliser des joints d'étanchéité plus épais sans augmenter l'épaisseur totale des plaques d'électrolyse.

L'étanchéité de chaque ensemble vis-à-vis de la vapeur d'eau sous pression est assurée par les connecteurs métalliques qui compriment les bords de l'électrolyte et par le joint 218.

La connexion électrique en série entre les colonnes s'effectue latéralement, comme on peut le voir sur la figure 24.

Nous allons maintenant expliquer la réalisation d'une plaque d'électrolyse selon ce quatrième mode de réalisation.

On dispose sur la plaque support une plaque perforée 212", puis un ensemble formé d'une cathode 246, d'un électrolyte 244 et d'une anode, l'anode étant du côté de la plaque perforée. Ensuite, un cadre 210 d'un connecteur est placé sur la cathode 246. L'empilement est ensuite solidarisé au moyen de vis.

Un nouvel ensemble formé d'une cathode, d'un électrolyte et d'une anode est mis en place sur la plaque perforée 212 du nouveau connecteur pour former une cellule adjacente connectée en série avec la cellule précédemment formée. Le montage se poursuit ainsi sur une colonne. Le changement de colonne s'effectue par la mise en place d'un connecteur horizontalement.

Dans l'exemple représenté, quatre colonnes de cinq cellules sont montées sur une face de la plaque support 202. Le même montage a lieu sur l'autre face. Il est bien entendu qu'il peut s'agir de plusieurs, voire centaines de cellules sur une plaque d'électrolyse.

Il est possible de prévoir un pré-assemblage des cellules sous forme de barrettes, par exemple de cinq cellules. Pour cela, on peut prévoir un jeu de taraudage et de vis pour le pré-assemblage et un jeu de taraudages et de vis pour le montage sur la plaque support.

Les broches anodique et cathodique 208 sont avantageusement formées par la plaque perforée et le cadre (figure 24).

Il est bien entendu que l'on peut prévoir un montage en parallèle des colonnes.

On peut prévoir que les deux faces de la plaque d'électrolyseur soient connectées en série comme cela est représenté sur la figure 24, par exemple au moyen d'un connecteur chevauchant la plaque support et connectant deux colonnes de cellules. On peut prévoir une connexion à un bornier traversant la plaque support.

Si on souhaite un montage en parallèle, chaque face est connectée directement à l'alimentation générale de l'électrolyseur.

Dans l'exemple représenté, les colonnes sont disposées verticalement, mais une disposition horizontale est également envisageable.

Sur la figure 28, on peut voir une variante avantageuse de montage des cellules sur la plaque support, dans laquelle les cellules sont fixées sur la plaque support, non plus au moyen des vis, mais au moyen de profilés de serrage 316 venant serrer les bords latéraux des cellules contre la plaque support.

Les profilés de serrage 316 sont isolés électriquement.

Dans l'exemple représenté, on prévoit un assemblage préalable en barrettes représenté sur la figure 27, en solidarisant un cadre 310 d'un connecteur à la plaque perforée 312' d'un connecteur suivant, l'ensemble cathode-électrolyte-anode étant maintenu serré entre le cadre 310 et la plaque perforée 312'. La solidarisation s'effectue au moyen de vis isolées électriquement traversant les alésages 314 prévus dans les extrémités longitudinales des cadres et des plaques perforées.

Sur la figure 28, on voit les profilés de serrage 316 fixés par des vis sur la plaque support, la connexion en série entre les colonnes est obtenue par des connecteurs 318 fixés sur la plaque support. Lors du montage, l'extrémité de deux barrettes adjacentes sont enfichées dans le connecteur 318. Grâce à cette réalisation, tous les connecteurs peuvent être identiques.

Grâce au montage au moyen des profilés de serrage, les colonnes de cellules peuvent se dilater librement selon leurs directions longitudinale et latérale. En effet, il n'y a pas de point fixe, les cellules, peuvent glisser longitudinalement et latéralement par rapport aux profilés de serrage et à la plaque support tout en étant maintenues, ce qui permet d'accommoder les déformations des cellules provoquées par les variations de températures imposées par les phases transitoires de démarrage et d'arrêt de l'installation.

En outre, grâce aux profilés de serrage, il est possible d'effectuer le montage de toutes les cellules d'une colonne simultanément.

Dans l'exemple représenté, les profilés de serrage disposés entre deux colonnes de cellules appliquent un effort de serrage sur un bord latéral des deux colonnes. On pourrait cependant prévoir deux profilés distincts.

En outre, dans l'exemple représenté, les profilés s'étendent sur toute la hauteur de la plaque support, mais il bien entendu que l'on pourrait prévoir plusieurs profilés mis bout à bout.

Dans ce mode de réalisation, on peut réaliser l'étanchéité latérale de chaque cellule au moyen d'un joint périphérique à l'ensemble anode-électrolyte-cathode, le joint étant comprimé par le cadre et la plaque perforée.

Ce mode de réalisation permet de supprimer toute résistance de contact en réalisant des connexions en continu avec une résistance de connexion quasi nulle, puisque la connexion entre deux cellules adjacente s'effectue au moyen de plaques métalliques ou céramiques métalliques de grande section transverse. Elles peuvent en effet présenter une épaisseur de 1 à plusieurs millimètres et avoir une largeur au moins égale à celle des électrodes.

En outre, il permet de simplifier considérablement la collecte de l'oxygène formé, puisqu'il supprime les éléments de collecte de l'oxygène des autres modes de réalisation.

Il permet également de réduire la complexité des étanchéités car il ne reste plus qu'un seul joint plat assurant l'étanchéité des cellules plaquées par les vis ou les profilés de serrage, et par la pression de la vapeur d'eau sur la plaque support.

Par ailleurs, il permet de relier en série les cellules des deux faces d'une plaque support sans résistance de contact

Il permet également de multiplier le nombre de cellules sur une plaque support et donc de diminuer la surface de chaque cellule, tout en conservant une surface totale de cathode constante pour une plaque support, ce qui permet de diminuer le courant alimentant les cellules et la chute de potentiel liée aux résistances électriques.

Ce mode de réalisation permet de disposer de très grandes surfaces totales de cellules. Pour un niveau de production d'hydrogène donné, il permet donc des valeurs de densité de courant très faibles, inférieures à 2000 A/m2, ce qui augmente l'endothermicité de l'électrolyseur.

Enfin, ce mode de réalisation simplifie la fabrication des cellules d'électrolyse, et une fabrication en grande série de barrettes de plusieurs dizaines cellules, voire centaines de cellules, prêtes à être disposées sur leur plaque support, peut être envisagée. Ceci a pour effet d'orienter la fabrication en grande série vers une réalisation modulaire des différents éléments des électrolyseurs. On pourra ainsi disposer de barrettes de plusieurs dizaines de cellules fabriquées dans une unité de fabrication, qui seront ensuite envoyées vers une unité de montage sur les plaques support, elles mêmes envoyées vers une unité d'assemblage des électrolyseurs.

Dans l'exemple représenté, la taille des fenêtres est proche des celle des cellules, mais ceci n'est en aucun cas nécessaire. En effet, on peut prévoir de réaliser des fenêtres de taille réduite et des canaux dans les plaques 212 pour drainer l'oxygène produit à l'anode vers la fenêtre. Cette structure facilite la réalisation de l'étanchéité entre les cellules et la plaque support.

L'électrolyseur selon la présente invention a été décrit en utilisant comme exemple l'électrolyse de l'eau et la collecte d'oxygène, cependant il est bien entendu que l'architecture de l'électrolyseur selon la présente invention peut s'appliquer à l'électrolyse d'autres gaz et à la collecte de tout autre gaz.

**Revendications**

1. Electrolyseur pour électrolyse haute température apte à fonctionner en mode allothermique comportant une enceinte apte à maintenir un bain électrolytique sous haute ou très haute pression de plusieurs dizaines de bars, dans lequel sont disposées une pluralité de plaques d'électrolyses (100) parallèles entre elles et des moyens de chauffage (8) d'un fluide actif destiné à subir une électrolyse haute température, lesdits moyens de chauffage utilisant un fluide caloporteur, lesdites plaques d'électrolyse (100) comportant une pluralité de cellules d'électrolyse (8, 208) juxtaposées sensiblement dans un même plan, chaque cellule d'électrolyse comportant une anode et une cathode, distinctes des anodes et des cathodes respectivement des autres cellules, au moins une partie des dites cellules d'électrolyse d'une plaque d'électrolyse étant connectées électriquement en série, dans lequel les moyens de chauffage (10) sont formés par une pluralité de plaques de chauffage (10) disposées de part et d'autre des plaques d'électrolyse (100), dans lesquelles circule le fluide caloporteur.

2. Electrolyseur selon la revendication 1, dans lequel le bain électrolytique est sous forme gazeuse.

3. Electrolyseur haute température selon la revendication 1 ou 2, dans lequel le fluide caloporteur est un gaz sous haute pression, par exemple de l'hélium, un métal fondu, par exemple du zinc, ou des sels fondus.

4. Electrolyseur selon l'une des revendications 1 à 3, dans lequel la plaque d'électrolyse comporte une plaque support (202) munie d'ouvertures réparties en lignes et en colonnes sur ses deux faces, la plaque support (202) étant creuse pour la collecte du gaz produit à l'anode, ladite plaque comportant un collecteur dudit gaz, au moins une partie des cellules d'électrolyse (208) étant connectées électriquement deux à deux par un connecteur comportant un cadre rapporté sur une cathode d'une cellule et une plaque perforée rapportée sur une anode d'une cellule adjacente de sorte à offrir une résistance électrique de connexion réduite entre les plaques, et dans lequel chaque ouverture est obturée par une cellule d'électrolyse, chaque anode étant orientée vers l'intérieur de la plaque support (202).

5. Electrolyseur, selon la revendication précédente, dans lequel l'anode et la cathode sont maintenues comprimées avec un électrolyte par le cadre d'un connecteur et la plaque perforée d'un autre connecteur.

6. Electrolyseur selon la revendication précédente, comportant des assemblages de cellules formant des barrettes allongées, chaque barrette comportant un nombre identique d'anodes égal au nombre d'ouvertures par ligne ou par colonne, les barrettes étant connectés en série.

7. Electrolyseur selon l'une des revendications 4 à 6, comportant un joint entre chaque plaque perforée et le contour de l'ouverture associée, ledit joint étant comprimé par les moyens de fixation des cellules sur la plaque support et la pression du bain électrolytique à haute ou très haute pression.

8. Electrolyseur, selon l'une des revendications 4 à 7, dans lequel les cellules des deux faces sont connectées en série par un connecteur traversant la plaque support ou chevauchant un des bords latéraux.

9. Electrolyseur selon l'une des revendications 1 à 3, dans lequel la plaque d'électrolyse comporte un cadre support (102) comportant des montants (106, 108) délimitant des fenêtres rectangulaires disposées en lignes et en colonnes dans lequel sont montées les cellules d'électrolyse (8) de forme correspondante.

10. Electrolyseur selon la revendication précédente, dans lequel chaque cellule d'électrolyse comporte un corps central (8.1) formé par une âme électriquement conductrice (40) sous forme de plaque, recouverte sur ses deux faces par l'anode (42), elle-même recouverte par un électrolyte (44), lui-même recouvert par la cathode (46), et un boîtier (8.2) électriquement conducteur entourant le corps central (8.1) et en contact électrique avec la cathode (46) et exerçant un effort de compression sur les couches formant le corps central (8.1), une broche d'anode (50, 50') et des moyens de connexion électrique (70, 70') de la cathode portés par le boîtier (8.2), la cellule (8) étant fixée sur le cadre support (102) par le boîtier (8.2).

**11.** Electrolyseur selon la revendication 10, dans lequel le boîtier (8.2) comporte deux demi-cadres (66) venant de part et d'autre du corps central (8.1) de manière à appliquer les couches les unes contre les autres, des moyens (72) pour isoler électriquement l'anode (42) du boîtier (8.2) étant prévus entre l'âme (40), l'anode (42) et le boîtier (8.2).

**12.** Electrolyseur selon la revendication 10 ou 11, comportant des moyens de collecte du ou des gaz produit à l'anode vers l'extérieur de l'électrolyseur, lesdits moyens de collecte comportant au moins un canal pratiqué dans l'anode et relié à un embout de collecte, et le cadre support (102), ledit cadre support (102) étant creux et formant un collecteur dudit ou desdits gaz, l'embout de collecte étant relié de manière étanche audit cadre support (102), ledit cadre amenant le ou les gaz produits en dehors de l'électrolyseur, la pression du ou des gaz produits à l'anode étant inférieure à celle du bain électrolytique à la cathode, l'anode, l'électrolyte et la cathode étant ainsi pressés les uns contre les autres.

**13.** Electrolyseur selon la revendication précédente, dans lequel des rainures (54) et des réservoirs (56.1, 56.2) sont réalisées dans l'âme (40) de la cellule d'électrolyse (8), l'un des réservoirs (56.2) étant relié à l'embout de collecte (58) du ou des gaz, ledit embout (58) étant brasé sur un raccord (114) fixé sur le cadre support (102), des moyens pour isoler électriquement l'anode du cadre support étant prévus entre le raccord (114) et le cadre support (102).

**14.** Electrolyseur selon l'une des revendications 1 à 13, dans lequel les cellules d'électrolyse (8) sont réparties en colonnes et en lignes, les cellules (8) d'une même colonne étant reliées électriquement en série, les colonnes étant reliées en série et les plaques d'électrolyse étant reliées en série entre elles ou en parallèle.

**15.** Electrolyseur selon la revendication 14, dans lequel les connexions électriques entre les différentes plaques et avec une source d'alimentation électrique sont prévues à l'extérieur de l'enceinte.

**16.** Electrolyseur selon la revendication 15, dans lequel lesdites connexions électriques sont refroidies.

**17.** Installation de production de gaz par électrolyse comportant :

- au moins un électrolyseur selon l'une des revendications 1 à 16,
- une alimentation électrique à tension donnée,

dans laquelle les cellules d'une même plaque sont connectées en série et les plaques d'électrolyse sont connectées en parallèle, le nombre de cellules d'électrolyse par plaque d'électrolyse étant choisi en fonction de la tension donnée de l'alimentation électrique.

**18.** Installation de production de gaz par électrolyse comportant :

- au moins un électrolyseur selon l'une des revendications 1 à 16,
- une alimentation électrique à tension donnée,

dans laquelle les cellules (8) d'électrolyse de chaque plaque sont réparties en colonnes et en lignes, les cellules de chaque colonne étant reliées en série, les colonnes étant reliées en parallèle, le nombre de cellules de chaque colonne étant choisi en fonction de la tension donnée de l'alimentation électrique.

**19.** Procédé de fabrication de dihydrogène et d'oxygène par électrolyse à partir d'eau mettant en oeuvre un électrolyseur selon l'une quelconque des revendications 1 à 16, dans lequel la pression du bain électrolytique est sensiblement égale ou supérieure à la pression de stockage et/ou de distribution de dihydrogène ou du dioxygène, par exemple entre 30 bars et 130 bars.

**20.** Procédé de fabrication de dihydrogène et de dioxygène par électrolyse selon la revendication 19, dans lequel le rapport entre le débit molaire de vapeur d'eau et le débit molaire de dihydrogène produit a une valeur de 2 à 5.

**Patentansprüche**

**1.** Elektrolyseur für die Hochtemperaturelektrolyse, der dazu ausgelegt ist, in einem allothermen Modus zu funktionieren, umfassend einen Behälter, der dazu ausgelegt ist, ein elektrolytisches Bad unter hohem oder sehr hohem Druck von mehreren zehn Bar zu halten, in dem eine Mehrzahl von zueinander parallelen Elektroseplatten (100) und Mittel (8) zum Heizen eines aktiven Fluids angeordnet sind, das dazu ausgelegt ist, eine Hochtemperaturelektrolyse zu erfahren, wobei die Heizmittel ein Wärmeübertragungsfluid verwenden, wobei die Elektroseplatten (100) eine Mehrzahl von Elektrolysezellen (8, 208) umfassen, die im Wesentlichen in ein und derselben Ebene nebeneinander angeordnet sind, wobei jede Elektrolysezelle eine Anode und eine Kathode umfasst, die von den Anoden beziehungsweise Kathoden der anderen Zellen verschieden sind, wobei wenigstens ein Teil der Elektrolysezellen einer Elektroseplatte elektrisch in Reihe verbunden sind, wobei die Heizmittel (10) durch eine Mehrzahl von Heizplatten (10) gebildet sind, die auf beiden Seiten der Elektroseplatten (100) angeordnet sind, in denen das Wärmeübertragungsfluid zirkuliert.

2. Elektrolyseur nach Anspruch 1, wobei das elektrolytische Bad gasförmig ist.

3. Hochtemperatur-Elektrolyseur nach Anspruch 1 oder 2, wobei das Wärmeübertragungsfluid ein Gas unter hohem Druck ist, beispielsweise Helium, ein geschmolzenes Metall, beispielsweise Zink, oder geschmolzene Salze.

4. Elektrolyseur nach einem der Ansprüche 1 bis 3, wobei die Elektroseplatte eine Tragplatte (202) umfasst, die mit Öffnungen ausgestattet ist, welche in Zeilen und in Spalten über ihre zwei Flächen verteilt sind, wobei die Tragplatte (202) zum Sammeln von Gas, das an der Anode produziert wird, hohl ist, wobei die Platte einen Kollektor für das Gas umfasst, wobei wenigstens ein Teil der Elektrolysezellen (208) elektrisch paarweise durch einen Verbinder verbunden sind, der einen Rahmen umfasst, der an einer Kathode einer Zelle angebracht ist, sowie eine perforierte Platte, die an einer Anode einer benachbarten Zelle angebracht ist, derart, dass ein verringerter elektrischer Verbindungswiderstand zwischen den Platten bereitgestellt wird, und wobei jede Öffnung durch eine Elektrolysezelle verschlossen ist, wobei jede Anode zum Inneren der Tragplatte (202) orientiert ist.

5. Elektrolyseur nach dem vorhergehenden Anspruch, wobei die Anode und die Kathode durch den Rahmen eines Verbinders und die perforierte Platte eines anderen Verbinders mit einem Elektrolyten komprimiert gehalten werden.

6. Elektrolyseur nach dem vorhergehenden Anspruch, umfassend Gruppen von Zellen, die längliche Leisten bilden, wobei jede Leiste eine identische Zahl von Anoden gleich der Zahl von Öffnungen pro Zeile oder pro Spalte umfasst, wobei die Leisten in Reihe verbunden sind.

7. Elektrolyseur nach einem der Ansprüche 4 bis 6, umfassend eine Dichtung zwischen jeder perforierten Platte und dem Umfang der zugeordneten Öffnung, wobei die Dichtung durch die Mittel zur Befestigung der Zellen an der Tragplatte und dem Druck des elektrolytischen Bads unter hohem oder sehr hohem Druck komprimiert ist.

8. Elektrolyseur nach einem der Ansprüche 4 bis 7, wobei die Zellen der zwei Flächen in Reihe durch einen Verbinder verbunden sind, der die Tragplatte durchsetzt oder einen der lateralen Ränder überlappt.

9. Elektrolyseur nach einem der Ansprüche 1 bis 3, wobei die Elektroseplatte einen Tragrahmen (102) umfasst, der Stützen (106, 108) umfasst, die rechteckige Fenster begrenzen, welche in Zeilen und in Spalten angeordnet sind, in dem die Elektrolysezellen (8) in entsprechender Form montiert sind.

10. Elektrolyseur nach dem vorhergehenden Anspruch, wobei jede Elektrolysezelle einen Zentralkörper (8.1) umfasst, der durch eine elektrisch leitende plattenförmige Seele (40) gebildet ist, die an ihren zwei Flächen durch die Anode (42) bedeckt ist, welche selbst wiederum durch einen Elektrolyt (44) bedeckt ist, welcher selbst wiederum durch die Kathode (46) bedeckt ist, sowie ein elektrisch leitfähiges Gehäuse (8.2.), das den Zentralkörper (8.1) umgibt und in elektrischem Kontakt mit der Kathode (46) ist und eine Kompressionskraft auf die Schichten ausübt, die den Zentralkörper (8.1) bilden, wobei ein Anodenstift (50, 50') und elektrische Verbindungsmittel (70, 70') der Kathode durch das Gehäuse (8.2) getragen werden, wobei die Zelle (8) an dem Tragrahmen (102) durch das Gehäuse (8.2) befestigt ist.

11. Elektrolyseur nach Anspruch 10, wobei das Gehäuse (8.2) zwei Halbrahmen (66) umfasst, die sich auf beiden Seiten des Zentralkörpers (8.1) derart befinden, dass die Schichten gegeneinander gedrückt werden, wobei Mittel (72) zum elektrischen Isolieren der Anode (42) des Gehäuses (8.2) zwischen der Seele (40), der Anode (42) und dem Gehäuse (8.2.) vorgesehen sind.

12. Elektrolyseur nach Anspruch 10 oder 11, umfassend Mittel zur Abfuhr des Gases oder der Gase, das/die an der Anode produziert wird/werden, nach außerhalb des Elektrolyseurs, wobei die Abfuhrmittel wenigstens einen Kanal umfassen, der in der Anode vorgesehen und mit einem Abfuhransatzstück verbunden ist und den Tragrahmen (102), wobei der Tragrahmen (102) hohl ist und einen Abfuhrkollektor für das Gas oder die Gase bildet, wobei das Abfuhransatzstück auf dichte Weise mit dem Tragrahmen (102) verbunden ist, wobei der Rahmen das erzeugte Gas oder die erzeugten Gase aus dem Elektrolyseur hinaus bringt, wobei der Druck des Gases oder der Gase, das/die an der Anode produziert wird/werden, kleiner ist als jener des elektrolytischen Bads an der Kathode, wobei die Anode, der Elektrolyt und die Kathode somit gegeneinander gedrückt werden.

13. Elektrolyseur nach dem vorhergehenden Anspruch, wobei Rillen (54) und Reservoirs (56.1, 56.2) in der Seele (40) der Elektrolysezelle (8) realisiert sind, wobei eines der Reservoirs (56.2) mit dem Abfuhransatzstück (58) für das Gas oder die Gase verbunden ist, wobei das Ansatzstück (58) an einen Verbinder (114) gelötet ist, der an dem Tragrahmen (102) befestigt ist, wobei Mittel zum elektrischen Isolieren der Anode vom Tragrahmen zwischen dem Verbinder (114) und dem Tragrahmen (102) vorgesehen sind.

14. Elektrolyseur nach einem der Ansprüche 1 bis 13, wobei die Elektrolysezellen (8) in Spalten und in Zeilen verteilt sind, wobei die Zellen (8) ein und derselben Spalte elektrisch in Reihe verbunden sind, wobei die Spalten in Reihe verbunden sind und die Elektrolyseplatten in Reihe miteinander verbunden sind oder parallel.

15. Elektrolyseur nach Anspruch 14, wobei die elektrischen Verbindungen zwischen den verschiedenen Platten und mit einer elektrischen Versorgungsquelle außerhalb des Behälters vorgesehen sind.

16. Elektrolyseur nach Anspruch 15, wobei die elektrischen Verbindungen gekühlt sind.

17. Anlage zur Gasproduktion durch Elektrolyse, umfassend:

 - wenigstens einen Elektrolyseur nach einem der Ansprüche 1 bis 16,
 - eine elektrische Versorgung mit gegebener Spannung,

wobei die Zellen ein und derselben Platte in Reihe verbunden sind, und die Elektrolyseplatten parallel verbunden sind, wobei die Zahl von Elektrolysezellen pro Elektrolyseplatte als Funktion der gegebenen Spannung der elektrischen Versorgung gewählt ist.

18. Anlage zur Gasproduktion durch Elektrolyse, umfassend:

 - wenigstens einen Elektrolyseur nach einem der Ansprüche 1 bis 16,
 - eine elektrische Versorgung mit gegebener Spannung,

wobei die Elektrolysezellen (8) jeder Platte in Spalten und in Zeilen verteilt sind, wobei die Zellen jeder Spalte in Reihe verbunden sind, wobei die Spalten parallel verbunden sind, wobei die Zahl von Zellen jeder Spalte als Funktion der gegebenen Spannung der elektrischen Versorgung gewählt ist.

19. Verfahren zur Herstellung von Dihydrogen und von Sauerstoff durch Elektrolyse ausgehend von Wasser unter Verwendung eines Elektrolyseurs nach einem der Ansprüche 1 bis 16, wobei der Druck des elektrolytischen Bads im Wesentlichen gleich oder größer dem Druck der Lagerung und/oder der Verteilung von Dihydrogen oder von Dioxygen ist, beispielsweise zwischen 30 Bar und 130 Bar.

20. Verfahren zur Herstellung von Dihydrogen und von Dioxygen durch Elektrolyse nach Anspruch 19, wobei das Verhältnis zwischen der molaren Rate von Wasserdampf und der molaren Rate von erzeugtem Dihydrogen einen Wert von 2 bis 5 hat.

**Claims**

1. Electrolyser for high temperature electrolysis capable of operating in allothermal mode, comprising an enclosure capable of maintaining an electrolytic bath at high or very high pressure of several tens of bars, in which a plurality of electrolysis plates (100) are arranged parallel to each other and also heating means (8) to heat an active fluid intended to undergo high temperature electrolysis, said heating means using a heat-transfer fluid, said electrolysis plates (100) comprising a plurality of electrolysis cells (8, 208) lying side by side substantially in one same plane,

23

each electrolysis cell comprising an anode and a cathode, separate from the respective anodes and cathodes of the other cells, at least part of said electrolysis cells of an electrolysis plate being electrically connected in series, wherein the heating means (10) are formed of a plurality of heating plates (10) arranged either side of the electrolysis plates (100), in which the heat-transfer fluid circulates.

2. Electrolyser according to claim 1, wherein the electrolytic bath is in gaseous form.

3. High temperature electrolyser according to claim 1 or 2, wherein the heat-transfer fluid is a gas under high pressure e.g. helium, a molten metal e.g. zinc or molten salts.

4. Electrolyser according to any of claims 1 to 3, wherein the electrolysis plate comprises a support plate (202) provided with openings distributed in rows and columns on its two faces, the support plate (202) being hollow to collect the gas produced at the anode, said plate comprising a manifold of said gas, at least part of the electrolysis cells (208) being electrically connected two by two by a connector comprising a frame added onto a cathode of a cell and a perforated plate added onto an anode of an adjacent cell, so as to offer reduced electric connection resistance between the plates, and wherein each opening is closed by an electrolysis cell, each anode facing towards the inside of the support plate (202).

5. Electrolyser according to the preceding claim, wherein the anode and the cathode are held compressed with an electrolyte by the frame of a connector and the perforated plate of another connector.

6. Electrolyser according to the preceding claim, comprising assemblies of cells forming elongate arrays, each array comprising an identical number of anodes equal to the number of openings per row or per column, the arrays being connected in series.

7. Electrolyser according to any of claims 4 to 6, comprising a seal between each perforated plate and the contour of the associated opening, said seal being compressed by the means to fix the cells onto the support plate and by the pressure of the electrolytic bath at high or very high pressure.

8. Electrolyser according to any of claims 4 to 7, wherein the cells of the two faces are connected in series by a connector passing through the support plate or overlapping one of the side edges.

9. Electrolyser according to any of claims 1 to 3, wherein the electrolysis plate comprises a supporting frame (102) comprising uprights (106, 108) delimiting rectangular windows arranged in rows and columns and in which the electrolysis cells (8) of corresponding shape are arranged.

10. Electrolyser according to the preceding claim, wherein each electrolysis cell comprises a central body (8.1) formed by an electrically conductive core (40) in the form of a plate, coated on its two faces by the anode (42), itself coated with an electrolyte (44), itself coated with the cathode (46), and an electrically conductive casing (8.2) surrounding the central body (8.1) and in electric contact with the cathode (46) and exerting a compression force on the layers forming the central body (8.1), an anode pin (50, 50') and cathode electric connection means (70, 70') carried by the casing (8.2), the cell (8) being fixed on the supporting frame (102) by the casing (8.2).

11. Electrolyser according to claim 10, wherein the casing (8.2) comprises two semi-frames (66) derived from either side of the central body (8.1) so as to apply the layers one against the other, means (72) to insulate the anode (42) electrically from the casing (8.2) being provided between the core (40), the anode (42) and the casing (8.2).

12. Electrolyser according to claim 10 or 11, comprising means to collect the gas or gases produced at the anode towards outside the electrolyser, the collection means comprising at least one channel made in the anode and connected to a collection end-piece, and the supporting frame (102), said supporting frame (102) being hollow and forming a manifold of said gas or gases, the collection end-piece being sealingly connected to said supporting frame (102), said frame taking the produced gas or gases to outside the electrolyser, the pressure of the gas or gases produced at the anode being lower than the pressure at the cathode of the electrolytic bath, the anode, electrolyte and cathode therefore being pressed one against the other.

13. Electrolyser according to the preceding claim, wherein grooves (54) and reservoirs (56.1, 56.2) are made in the core (40) of the electrolysis cell (8), one of the reservoirs (56.2) being connected to the collection end-piece (58) of the gas or gases, said end-piece (58) being brazed onto a connector (114) fixed to the supporting frame (102), means to electrically insulate the anode from the supporting frame being provided between the connector (114) and the supporting frame (102).

**14.** Electrolyser according to any of claims 1 to 13, wherein the electrolysis cells (8) are distributed in rows and columns, the cells (8) of one same column being electrically connected in series, the columns being connected in series and the electrolysis plates being connected in series with each other or in parallel.

**15.** Electrolyser according to claim 14, wherein the electric connections between the different plates and with an electric power source are provided outside the enclosure.

**16.** Electrolyser according to claim 15, wherein said electric connections are cooled.

**17.** Installation to produce gas by electrolysis comprising:

   - at least one electrolyser according to any of claims 1 to 16,
   - an electric supply at a given voltage,

wherein the cells of one same plate are connected in series and the electrolysis plates are connected in parallel, the number of electrolysis cells per electrolysis plate being chosen in relation to the given voltage of the electric supply.

**18.** Installation to produce gas by electrolysis comprising:

   - at least one electrolyser according to any of claims 1 to 16,
   - an electric supply at a given voltage,

wherein the electrolysis cells (8) of each plate are distributed in rows and columns, the cells of each column being connected in series, the columns being connected in parallel, the number of cells of each column being chosen in relation to the given voltage of the electric supply.

**19.** Method to produce dihydrogen and oxygen by electrolysis from water, using an electrolyser according to any of claims 1 to 16, wherein the pressure of the electrolytic bath is substantially equal to or more than the storage and/or distribution pressure of dihydrogen or dioxygen, for example between 30 bars and 130 bars.

**20.** Method to produce dihydrogen and dioxygen by electrolysis according to claim 19, wherein the ratio between the molar flow rate of water vapour and the molar flow rate of the produced dihydrogen is 2 to 5.

FIG. 1A

FIG. 1B

FIG. 2A

FIG. 2B

EP 2 181 203 B1

FIG. 3

FIG. 4

FIG. 5

EP 2 181 203 B1

FIG. 6

FIG. 7A

# FIG. 7B

FIG. 8A

FIG. 8C

FIG. 8B

FIG. 9

FIG. 10

FIG. 11A

FIG. 11B

FIG. 11C

FIG. 11D

97

88

99

50

95

98

FIG. 12

116

114

119

112

106

FIG. 14

110

FIG. 13

FIG. 15A

FIG. 15B

FIG. 16A

FIG. 16B

FIG. 16C

FIG. 17A

# FIG. 17B

FIG. 18

FIG. 19

FIG. 20

FIG. 21

FIG. 22

FIG. 23

FIG. 24

FIG. 25

FIG. 26A

FIG. 26B

FIG. 26C

210

246

212'

204   216

FIG. 27

310

314

312'

314

FIG. 26D

FIG. 28

**EP 2 181 203 B1**

**Documents brevets cités dans la description**

- WO 2004113590 A